# EUROPEAN PATENT SPECIFICATION

(11) **EP 3 968 413 B1**
(45) Date of publication and mention of the grant of the patent: **19.02.2025**
(21) Application number: 21155179.1
(22) Date of filing: 04.02.2021
(51) Int. Cl.: H01M 4/485

(54) **ACTIVE MATERIAL, ELECTRODE, SECONDARY BATTERY, BATTERY PACK, AND VEHICLE**
AKTIVMATERIAL, ELEKTRODE, SEKUNDÄRBATTERIE, BATTERIESATZ UND FAHRZEUG
MATÉRIAU ACTIF, ÉLECTRODE, BATTERIE SECONDAIRE, BLOC-BATTERIE ET VÉHICULE

(30) Priority: 14.09.2020 JP 2020154028
(43) Date of publication of application: 16.03.2022
(73) Proprietor: Kabushiki Kaisha Toshiba, Tokyo 105-0023 (JP)
(72) Inventor: Harada, Yasuhiro, Tokyo 105-0023 (JP); Yoshima, Kazuomi, Tokyo 105-0023 (JP); Takami, Norio, Tokyo 105-0023 (JP)
(74) Representative: Hoffmann Eitle

(56) References cited:
- EP-A1- 2 999 032
- JP-A- 2020 031 010

## Description

### FIELD

The present disclosure relates generally to an active material, an electrode, a secondary battery, a battery pack, and a vehicle.

### BACKGROUND

In recent years, nonaqueous electrolyte batteries such as lithium ion secondary batteries are ardently studied and developed to make high energy density batteries. Nonaqueous electrolyte batteries are expected to find applications such as the power source for hybrid automobiles and electric automobiles, and uninterruptible power supply of mobile stations. Therefore, nonaqueous electrolyte batteries are expected to have other features such as quick charge and discharge characteristics, and long-term reliability. For example, nonaqueous electrolyte batteries which can be quickly charged and discharged allows marked reduction of the charge time, and also allows the improvement in the engine performance of hybrid automobiles and efficient recovery of regenerated energy of engine power.

Quick charge and discharge requires quick movement of electrons and lithium ions between the positive and negative electrodes.

Firstly, batteries including a carbon-based negative electrode were developed. However, when a battery including a carbon-based negative electrode is repeatedly subjected to quick charge and discharge, dendrites of metal lithium deposit on the electrode, which can result in heat generation and ignition caused by internal short-circuit.

Therefore, batteries including a metal complex oxide in place of a carbonaceous substance as the negative electrode were developed. In particular, a battery including titanium oxide as the negative electrode allows stable and quick charge and discharge, and has a longer life than those including a carbon-based negative electrode.

However, titanium oxide has a higher (nobler) potential to metal lithium than carbonaceous substances. In addition, titanium oxide has a low capacity for the unit weight. Therefore, the battery including titanium oxide as the negative electrode has a low energy density.

Specifically, the electrode potential of titanium oxide is about 1.5 V with reference to metal lithium, which is higher (nobler) in comparison with the potential of a carbon-based negative electrode. The potential of titanium oxide is attributable to the oxidation-reduction reaction between Ti³⁺ and Ti⁴⁺ during electrochemical insertion and desorption of lithium, and thus is electrochemically limited. In addition, there is a fact that quick charge and discharge of lithium ions can be stably carried out at a high electrode potential of about 1.5 V. Accordingly, it is substantially difficult to decrease the electrode potential for improving the energy density.

Regarding the capacity for the unit weight, the theoretical capacity of titanium dioxide (anatase type) is about 165 mAh/g, and the theoretical capacity of a lithium titanium complex oxide such as Li₄Ti₅O₁₂ is about 180 mAh/g. On the other hand, the theoretical capacity of a common graphite-based active material is 385 mAh/g or more. Accordingly, the capacity density of titanium oxide is markedly lower than that of a carbon-based negative electrode. The reason for this is that the crystal structure of titanium oxide contains few sites for occluding lithium, and lithium is readily stabilized in the structure, which results in the decrease of the substantial capacity.

Furthermore, in EP 2 999 032 A1, an active material is described, which comprises particles, each comprising a core phase comprising a first monoclinic niobium-titanium composite oxide; and a shell phase comprising a second monoclinic niobium-titanium composite oxide and surrounding at least a part of the core phase. An oxidation number of titanium in the core phase is larger than an oxidation number of titanium in the shell phase, and/or an oxidation number of niobium in the core phase is larger than an oxidation number of niobium in the shell phase. According to an embodiment, the first monoclinic niobium-titanium composite oxide is represented by the formula Nb₂TiO₇. The second monoclinic niobium-titanium composite oxide may be represented by the formula Nb_{1.33}Ti_{0.67}O₄.

JP 2022-031010 A is concerned with a negative electrode active material, which supposed to be for a sodium ion battery. The negative electrode active material includes at least one of a KTiNbO₅ phase and a KTi₅NbO₁₄ phase.

### BRIEF DESCRIPTION OF THE DRAWINGS

FIG. 1 is a schematic view illustrating a crystal structure of monoclinic TiNb₂O₇;
FIG. 2 is a schematic view illustrating the crystal structure of FIG. 1, as viewed from another direction;
FIG. 3 is a cross-sectional view schematically illustrating an example of a secondary battery according to an approach;
FIG. 4 is an enlarged cross-sectional view of a part A of the secondary battery illustrated in FIG. 3;
FIG. 5 is a partially cut-out perspective view schematically illustrating another example of the secondary battery according to the approach;
FIG. 6 is an enlarged cross-sectional view of a part B of the secondary battery illustrated in FIG. 5;
FIG. 7 is a perspective view schematically illustrating an example of a battery module according an approach;
FIG. 8 is an exploded perspective view schematically illustrating an example of a battery pack according to an approach;
FIG. 9 is a block diagram illustrating an example of an electric circuit of the battery pack illustrated in FIG. 8;
FIG. 10 is a partially transparent view schematically illustrating an example of a vehicle according to an approach; and
FIG. 11 is a view schematically illustrating an example of a control system relating to an electrical system in the vehicle according to the approach.

### DETAILED DESCRIPTION

According to an approach, an active material is provided. The active material includes a first niobium titanium composite oxide expressed by a general formula (I), and a second niobium titanium composite oxide expressed by a general formula (II) and having a rutile-type crystal structure. The first niobium titanium composite oxide belongs to a crystal structure of a space group C2/m, and has a difference Δp between a maximum value and a minimum value of Nb occupancy in a 4i site, the difference Δp being 0.50 ≤ Δp ≤ 0.80,

KₐNb_{2-b}M_{b+1-c}Ti_{c}O₇ ... (I)

Ti_{1-y}Nb_{y}O_{z} ... (II).

In the general formula (I), M is at least one element selected from the group consisting of P, Mo, W, Fe and Ta, a satisfies 0 ≤ a ≤ 1, b satisfies 0 ≤ b ≤ 1, and c satisfies 0 < c ≤ 1. In general formula (II), y satisfies 0 < y < 0.5, and z satisfies 2.0 ≤ z < 2.5.

According to another approach, an electrode is provided. The electrode includes the active material according to the approach.

According to another approach, a secondary battery is provided. The secondary battery includes a negative electrode, a positive electrode, and an electrolyte. The negative electrode is the electrode according to the approach.

According to another approach, a battery pack is provided. The battery pack includes the secondary battery according to the approach.

According to another approach, a vehicle is provided. The vehicle includes the battery pack according to the approach.

According to at least one of the approaches described above, it is possible to provide an electrode material that has an excellent repetitive quick charge-and-discharge performance, and can consistently achieve both a high energy density and a high-temperature durability.

### (First Embodiment)

An active material according to a first approach includes a first niobium titanium composite oxide expressed by a general formula (I), and a second niobium titanium composite oxide expressed by a general formula (II) and having a rutile-type crystal structure. The first niobium titanium composite oxide belongs to a crystal structure of a space group C2/m, and has a difference Δp between a maximum value and a minimum value of a Nb occupancy in a 4i site, the difference Δp being 0.50 ≤ Δp ≤ 0.80.

KₐNb_{2-b}M_{b+1-c}Ti_{c}O₇ ... (I)

Ti_{1-y}Nb_{y}O_{z} ... (II)

In the general formula (I), M is at least one element selected from the group consisting of P, Mo, W, Fe and Ta, a satisfies 0 ≤ a ≤ 1, b satisfies 0 ≤ b ≤ 1, and c satisfies 0 < c ≤ 1. In the general formula (II), y satisfies 0 < y < 0.5, and z satisfies 2.0 ≤ z < 2.5.

Here, the space group C2/m means symmetry belonging to a detailed notation C1 2/m 1 (International tables Vol. A No. 12, unique axis b, cell choice 1). The 4i site in the crystal of the first niobium titanium composite is a site notation using Wyckoff letters, and means the occupied site which has m symmetry and is expressed by atomic coordinates (X, 0, Y) (-X, 0, -Y), wherein X and Y are arbitrary numbers.

The complex oxide has a lithium occlusion potential of about 1.5 V (to Li/Li⁺), and thus allows stable repeated quick charge and discharge.

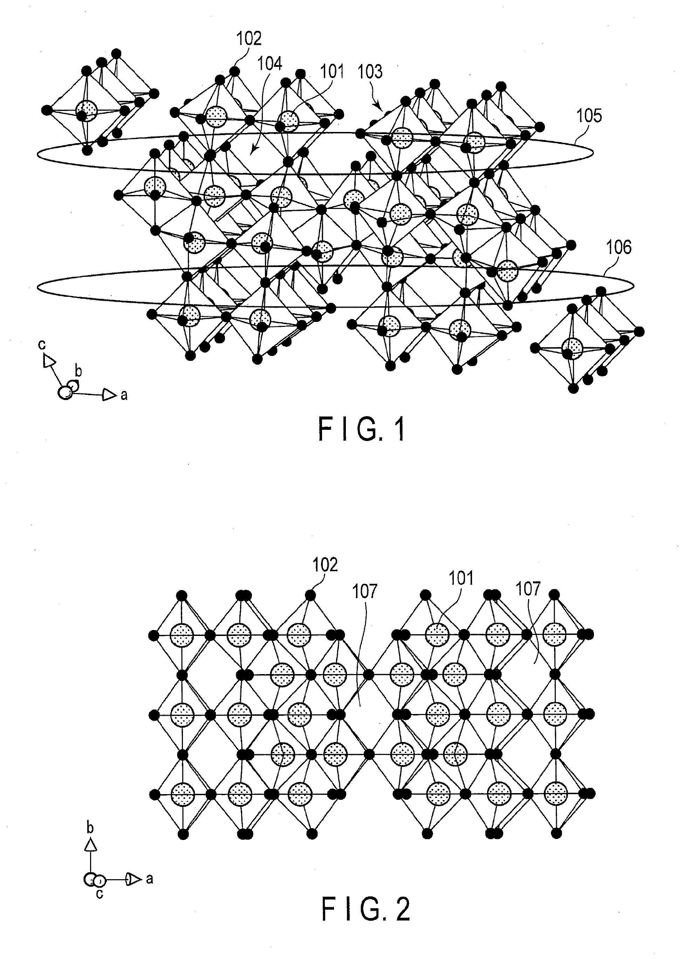

As an example of the first niobium titanium composite oxide expressed by the general formula KₐNb_{2-b}M_{b+1-c}Ti_{c}O₇, FIG. 1 and FIG. 2 show schematic views of the crystal structure of monoclinic Nb₂TiO₇. The first niobium titanium composite oxide has, for example, a monoclinic crystal structure.

As illustrated in FIG. 1, in the crystal structure of monoclinic Nb₂TiO₇, metal ions 101 and oxide ions 102 form a skeleton structure 103. Note that in a publicly known crystal structure, the metal ions 101 are composed of Nb ions and Ti ions which are randomly arranged in a ratio of Nb:Ti = 2:1. Specifically, in the crystal structure, there is no difference in occupancy of the respective elements. In the first niobium titanium composite oxide according to the approach, the difference Δp between the maximum value and the minimum value of the Nb occupancy in the 4i site is 0.50 ≤ Δp ≤ 0.80. This means that a site including a large amount of Nb is formed only in the identical 4i site. In this case, in the vicinity of the site containing more pentavalent cations (e.g. Nb), the electron correlation between the pentavalent cations and the oxide ions coordinated to the vicinity of the surrounding area is strengthened. Thus, as a result, the electron correlation between the lithium ions that is the guest and the oxide ion is weakened, and the mobility of the lithium ions in the solid can be improved.

The skeleton structures 103 are alternately and three-dimensionally arranged, and gap parts 104 are present between the skeleton structures 103. The gap part 104 host the lithium ions. Lithium is more smoothly inserted in the site hosting the lithium ions, compared to the above-described crystal structure in which Nb ions and Ti ions are randomly arranged.

In FIG. 1, regions 105 and 106 have two-dimension channels in the [100] and [010] directions. As shown in FIG. 2, the crystal structure of monoclinic Nb₂TiO₇ has gap parts 107 in the [001] direction. The gap parts 107 have a tunnel structure which is advantageous for conducting lithium ions, and work as the conductive channel connecting the regions 105 and 106 in the [001] direction. The conductive channel allows the movement of the lithium ions between the regions 105 and 106.

In this manner, in the first niobium titanium composite oxide according to the approach, the site preferentially containing many Nb cations exists only in the 4i site in the crystal structure. Thereby, in the crystal lattice hosting the lithium ions, there is a site preferentially containing many pentavalent cations which are effective in weakening the interaction between the lithium ions and the oxide ions, and the coexistence of the regions having two-dimensional channels, in which lithium ions are quickly diffused, and the conductive channel along the [001] direction, which connect these regions, improves the insertion-and-extraction properties of lithium ions. As a result, a high capacity and a high rate performance can be provided.

Note that the crystalline plane indices shown in the approach are indexed based on the symmetry of the space group C2/m (International tables Vol. A No. 12, unique axis b, cell choice 1).

Next, the second niobium titanium composite oxide expressed by the general formula Ti_{1-y}Nb_{y}O_{z} and having the rutile-type crystal structure will be described. In the rutile-type Ti_{1-y}Nb_{y}O_{z}, when lithium ions are inserted, titanium is reduced from tetravalence to trivalence. By the coexistence of this second niobium titanium composite oxide and the above-described first niobium titanium composite oxide, the electronic conductivity of the active material is improved, and therefore the quick charge-and-discharge performance is improved. Rutile-type titanium oxide (TiO₂) can similarly improve the electron conductivity, but the crystal structure thereof tends to vary when insertion and extraction of lithium ions are repeated by charge and discharge, and the charge-and-discharge performance tends to deteriorate, in particular, at high temperatures. The reason for this is that the titanium supporting the crystal structure becomes unstable due to a change in valence.

The second niobium titanium composite oxide according to the approach includes pentavalent niobium in the rutile-type crystal structure. Thereby, compared to the case where only titanium is included, the skeleton structure between the metal ions and the oxide ions is made stronger, and the crystal structure during charge and discharge is stabilized. Thereby, the charge-and-discharge stability at high temperatures can be improved. Furthermore, a rutile-type solid solution including elements with different valences such as niobium and titanium includes lattice defects, or electron holes or the like occur therein, in order to keep the neutrality of charges, and therefore there is an advantage that the electrical conductivity can easily be improved.

The second niobium titanium composite oxide has the rutile-type crystal structure. The rutile-type structure has a high affinity in a crystal interface with the first niobium titanium composite oxide which can have a monoclinic crystal structure, and, by mixing and heating them, the difference Δp between the maximum value and the minimum value of the Nb occupancy in the 4i site of the first niobium titanium composite oxide becomes easier to control. Specifically, by putting the first niobium titanium composite oxide and the second niobium titanium composite oxide in contact in a state in which the affinity of lattices is high, and heating them, the difference in concentration of Nb included in each oxide becomes a driving force, and it becomes possible to control the Nb occupancy in the 4i site of the first niobium titanium composite oxide. In order to increase the difference between the maximum value and the minimum value of the occupancy in the 4i site, it is preferable that the molar ratio of niobium to titanium in the first niobium titanium composite oxide is higher than the molar ratio of niobium to titanium in the second niobium titanium composite oxide.

In addition, since both the first niobium titanium composite oxide and the second niobium titanium composite oxide include Nb, the affinity of contact surfaces is further enhanced. Therefore, the control of the Nb occupancy is easier than in the case of using, for example, titanium dioxide including no Nb, instead of the second niobium titanium composite oxide. That is, by including the second niobium titanium composite oxide as the active material, the difference Δp between the maximum value and the minimum value of the Nb occupancy in the 4i site of the first niobium titanium composite oxide can be made higher. In this case, for example, Δp can be set to 0.50 or more, and can also be set to 0.60 or more.

The difference Δp between the maximum value and the minimum value of the Nb occupancy in the 4i site of the first niobium titanium composite oxide, which is expressed by the general formula KₐNb_{2-b}M_{b+1-c}Ti_{c}O₇ (0 ≤ a ≤ 1, 0 ≤ b ≤ 1, 0 < c ≤ 1), satisfies 0.50 ≤ Δp ≤ 0.8. If Δp is less than 0.5, the site, in which lithium ions are preferentially and easily inserted, is not easily generated, and there is no improvement in the quick charge-and-discharge performance. On the other hand, if Δp is greater than 0.8, a local strain of the crystal structure increases, and thus the charge-and-discharge stability at high temperatures decreases. Preferably, Δp is in a range of 0.55 or more to 0.65 or less.

The first niobium titanium composite oxide expressed by the general formula KₐNb_{2-b}M_{b+1-c}Ti_{c}O₇ may include at least one M element selected from the group consisting of P, Mo, W, Fe and Ta. The M element may be a cation. By the inclusion of P and Ta, the covalent bonding property with oxide ions increases, and thus the charge-and-discharge stability, in particular, at high temperatures, can be enhanced. Since Mo, W and Fe vary the Fermi level in a compound and provides electron conductivity, the quick charge-and-discharge performance, in particular, can be improved.

In the first niobium titanium composite oxide, the subscript a satisfies, preferably, 0 ≤ a ≤ 0.01. In this case, there is an advantageous effect of suppressing abnormal particle growth of a crystallite due to a flux function of potassium.

The subscript b satisfies, preferably, 0 ≤ b ≤ 0.1. In this case, there is an advantageous effect that both a high charge-and-discharge capacity and charge-and-discharge stability can consistently be achieved.

The subscript c satisfies, preferably, 0.8 ≤ c ≤ 1.0. In this case, there is an advantageous effect that both a high charge-and-discharge capacity and charge-and-discharge stability can consistently be achieved.

The molar ratio (M_{Nb}/M_{Ti}) of niobium to titanium in the first niobium titanium composite oxide is, for example, in a range of 1.0 to 2.0, and, preferably, in a range of 1.2 to 1.95. In the present specification and the patent claims, "M_{Nb}" indicates the amount of substance (the number of moles) of niobium atoms which the niobium titanium composite oxide includes, and "M_{Ti}" indicates the amount of substance (the number of moles) of titanium atoms which the niobium titanium composite oxide includes.

In the second niobium titanium composite oxide expressed by the general formula Ti_{1-y}Nb_{y}O_{z} (0 < y < 0.5, 2.0 ≤ z < 2.5), the subscript y satisfies, preferably, 0.0001 ≤ y ≤ 0.2. In this case, there is an advantageous effect that the control of the Nb occupancy in the 4i site of the first niobium titanium composite oxide becomes easier, the variance among particles is small, and the quality stability is enhanced.

The subscript z satisfies, preferably, 2.0 ≤ z ≤ 2.1. In this case, there is an advantageous effect that the control of the Nb occupancy in the 4i site of the first niobium titanium composite oxide becomes easier, the variance among particles is small, and the quality stability is enhanced.

The molar ratio (M_{Nb}/M_{Ti}) of niobium to titanium in the second niobium titanium composite oxide is, for example, in a range of 0.0001 to 0.25, and, preferably, in a range of 0.01 to 0.1.

As described above, it is preferable that the molar ratio (M_{Nb}/M_{Ti}) of niobium to titanium in the first niobium titanium composite oxide is higher than the molar ratio (M_{Nb}/M_{Ti}) of niobium to titanium in the second niobium titanium composite oxide. For example, this molar ratio in the first niobium titanium composite oxide may be 4 times to 20000 times higher than the molar ratio in the second niobium titanium composite oxide.

The particle form of the active material according to the approach is not particularly limited. For example, the particle form may be a mixture of a primary particle group including the first niobium titanium composite oxide and a primary particle group including the second niobium titanium composite oxide. In this mixture, primary particles included as the first niobium titanium composite oxide may be mutually granulated to form secondary particles. In addition, primary particles included as the second niobium titanium composite oxide may be mutually granulated to form secondary particles. Further, primary particles included as the first niobium titanium composite oxide and primary particles included as the second niobium titanium composite oxide may be mutually granulated to form secondary particles.

In the active material, the mixture molar ratio between the first niobium titanium composite oxide and the second niobium titanium composite oxide is, for example, in a range of 1:0.5 to 1:1.1, and preferably, in a range of 1:0.6 to 1:0.9. This molar ratio may be in a range of 1:0.5 to 1:1.0. As regards this molar ratio, when the mixture molar ratio between the first niobium titanium composite oxide and the second niobium titanium composite oxide is in a range of 1:0.5 to 1:1.1, there is an advantageous effect that both a high charge-and-discharge capacity and charge-and-discharge stability can consistently be achieved.

An average particle size D50 of the active material according to the approach is not particularly limited, and can be varied according to desired battery characteristics. However, in order to improve the diffusivity of lithium ions, it is preferable to decrease the particle size. The average particle size D50 of the active material is, preferably, 0.1 µm to 10 µm, and, more preferably, in a range of 0.1 µm to 1 µm.

As a measuring method of a particle size distribution (weight criterion distribution), it is possible to apply measurement by a laser diffractometer or the like. The particle size distribution is measured by the laser diffractometer, and the weight distribution (% by weight) is calculated. At this time, it is preferred to prevent flocculation of particles by ultrasonic vibration. Conditions for measurement are set to be conditions recommended by the laser diffractometer maker with respect to each of materials. At this time, when the material that is a target of measurement is an electrode, in order to extract the active material, a properly cut electrode is immersed in a solvent (preferably, an organic solvent such as alcohol or NMP), and ultrasonic waves are applied thereto. Thereby, the current collector foil and the active material or the like can be separated. Next, it is preferable that the dispersed liquid in which the active material and the like are dispersed is centrifuged by a centrifugal machine, and only the active material is separated from the electrode material including a conductive agent such as carbon. Alternatively, when material (carbon, a binder, and the like) other than the active material can be prepared, it is preferable to perform preliminary measurement on such powders, and to exclude a preliminary measurement result from the result of measurement.

The BET specific surface area of the complex oxide according to the present approach is not particularly limited, and preferably 5 m²/g or more and less than 200 m²/g. When the specific surface area is 5 m²/g or more, the contact area with the electrolytic solution is secured, whereby good discharge rate characteristics are easily achieved, and the charge time is reduced. When the specific surface area is less than 200 m²/g, reactivity to the electrolytic solution will not be too high, whereby life characteristics are improved. In addition, the application properties of the slurry containing an active material, which is used for the manufacture of the below-described electrode, is improved.

The specific surface area is measured by allowing a molecule, the area occupied by which is known, to absorb to the surface of powder particles at the temperature of liquid nitrogen, and determining the specific surface area of the sample from the amount of the molecule. The most frequently used is the BET method based on the physical adsorption of an inactive gas at low temperature and low humidity. The BET method is an extension of the Langmuir theory, which is a theory for monolayer molecular adsorption, to multilayer adsorption, and is the most famous theory for calculating the specific surface area. The specific surface area thus determined is referred to as BET specific surface area.

The active particle may include a carbon-containing layer on the surface thereof.

The active material according to the approach may be composed of only the first niobium titanium composite oxide and the second niobium titanium composite oxide, but the active material may further include some other active material. Examples of the other active material include lithium titanate having a ramsdellite structure (e.g. Li_{2+y}Ti₃O₇, 0 ≤ y ≤ 3), lithium titanate having a spinel structure (e.g. Li₄₊ₓTi₅O₁₂, 0 ≤ x ≤ 3), monoclinic titanium dioxide (TiO₂), anatase-type titanium dioxide, hollandite-type titanium composite oxide, and orthorhombic titanium-containing composite oxide.

### <Manufacturing method of the active material>

The active material of the approach can be manufactured by a method described below.

To begin with, a precursor of the first niobium titanium composite oxide is fabricated as follows. An oxide or a salt including at least one element M selected from the group consisting of P, Mo, W, Fe and Ta, and an oxide or a salt including at least one element M selected from the group consisting of K, Nb and Ti, are mixed at a predetermined molar ratio, so as to give a composite oxide expressed by KₐNb_{2-b}M_{b+1-c}Ti_{c}O₇ (0 ≤ a ≤ 1, 0 ≤ b ≤ 1, 0 < c ≤ 1). It is preferable that the above-described salt is a salt, such as a carbonate or a nitrate, which is dissolved at relatively low temperatures and forms an oxide. These raw material compounds are pulverized to an average particle size of 5 µm or less, and are blended as much as uniformly.

The mixture thus obtained is calcined at 800°C to 1200°C to obtain a calcined product, and then the product is sintered to obtain a sintered product. The sintering is performed multiple times in a temperature range of 1100°C to 1500°C for 5 hours to 30 hours in total. In addition, in order to obtain good crystallinity, it is effective to vary the temperatures of the sintering in a stepwise manner. For example, the temperature of the first sintering may be 1100°C, the temperature of the second sintering may be 1200°C, and the temperature of the third sintering may be 1300°C. More preferably, by pulverizing particles synthesized during the multiple times of sintering, it is possible to prevent large particles from further preferentially growing to larger particles. In this manner, the precursor of the first niobium titanium composite oxide can be obtained.

Next, the manufacturing method of the second niobium titanium composite oxide will be described. An oxide or a salt including at least one element selected from the group consisting of Nb and Ti is blended at a predetermined molar ratio, so as to give a rutile-type composite oxide expressed by the general formula Ti_{1-y}Nb_{y}O_{z} (0 < y < 0.5, 2.0 ≤ z < 2.5). It is preferable that the above-described salt is a salt, such as a carbonate or a nitrate, which is dissolved at relatively low temperatures and forms an oxide. These raw material compounds are pulverized to an average particle size of 5 µm, and are blended as uniformly as possible. The obtained mixture is calcined at 600°C to 1000°C to obtain a calcined product, and then the product is sintered to obtain a sintered product. The sintering is performed multiple times in a temperature range of 800°C to 1000°C for 5 hours to 30 hours in total. In this manner, the second niobium titanium composite oxide can be obtained.

Next, heat treatment is performed such that the difference Δp between the maximum value and the minimum value of the Nb occupancy in the 4i site of the first niobium titanium composite oxide becomes 0.50 ≤ Δp ≤ 0.80. In the present specification, this heat treatment is also referred to as "Nb maldistribution process". The first niobium titanium composite oxide before being subjected to the Nb maldistribution process is referred to as "precursor of the first niobium titanium composite oxide". This precursor and the second niobium titanium composite oxide are mixed and subjected to the heat treatment. Thereby, in the 4i sites in the crystal structure of the precursor, a site including a greater amount of Nb and a site including a relatively small amount of Nb can be formed.

In the Nb maldistribution process, to begin with, the first niobium titanium composite oxide (A) and the second niobium titanium composite oxide (B) are mixed at a freely chosen molar ratio by a ball mill. The mixing ratio between A and B is not particularly limited, but, for example, it is preferable to mix A and B at a molar ratio of 1:0.5 to 1:1. The mixture molar ratio between the first niobium titanium composite oxide and the second niobium titanium composite oxide in the obtained active material depends on the mixture molar ratio at this stage.

Next, the mixture is annealed (heat-treated) at temperatures of less than 600°C in a range of 30 minutes to 5 hours. As a result, the active material can be manufactured which includes the first niobium titanium composite oxide having the symmetry belonging to the space group C2/m, or the detailed notation C1 2/m 1 of (International tables Vol. A No. 12, unique axis b, cell choice 1), and having the difference Δp between the maximum value and minimum value of the Nb occupancy in the 4i site, which is 0.50 ≤ Δp ≤ 0.80, and the second niobium titanium composite oxide.

The degree of maldistribution of Nb in the 4i site can be controlled by varying the temperature and/or time of the annealing that is the Nb maldistribution process, or by making the first niobium titanium composite oxide expressed by the formula (I) include an additive element. As shown in Examples to be described later, for example, when the first niobium titanium composite oxide includes K and P, or the like, the melting point lowers, and thus the maldistribution amount of Nb increases. In other words, the Δp can be increased. In addition, for example, Ta, which may be a substituent element for Nb, is included, the randomization of Nb is promoted and the maldistribution amount can be decreased.

The above-described manufacturing method is merely an example, and it is not meant that the heat treatment in the state, in which the precursor of the first niobium titanium composite oxide and the second niobium titanium composite oxide are mixed, is indispensable in order to obtain the active material according to the approach. The manufacturing method is not particular limited if the active material is obtained which includes the first niobium titanium composite oxide expressed by the general formula (I) and the second niobium titanium composite oxide expressed by the general formula (II) and having the rutile-type crystal structure, the first niobium titanium composite oxide belonging to the space group C2/m and having the difference Δp between the maximum value and minimum value of the Nb occupancy in the 4i site, which is 0.50 ≤ Δp ≤ 0.80.

### <Powder x-ray diffractometry>

The measurement by powder x-ray diffraction (X-ray diffraction: XRD) may be carried out as follows. Firstly, an active material is pulverized to prepare a sample having an average particle size less than about 5 µm. The average particle size may be measured by laser diffraction analysis. The sample thus obtained is charged into the holder part having a depth of 0.2 mm formed on a glass sample plate. Subsequently, the surface of the filled sample is smoothened by pressing with another glass plate to the sample from the outside. The sample must be in a proper amount, thereby avoiding development of cracks, gaps, or unevenness in the filled sample. In addition, the glass plate must be pressed under a sufficient pressure. Subsequently, the glass plate filled with the sample is mounted on the powder x-ray diffraction apparatus, and the XRD pattern is obtained using a Cu-Kα line.

When the sample is highly oriented, the peak position may be shifted and the position intensity ratio may be changed by the state of sample filling. Such a highly oriented sample is measured using a capillary. More specifically, the sample is inserted into a capillary, the capillary is mounted on a rotary sample stand, and subjected to measurement. This measurement method relaxes the orientation. The capillary used herein is made of Lindemann glass.

When the active material is included in the battery as an electrode material, measurement can be performed as follows. Firstly, lithium ions are completely desorbed from a complex oxide containing niobium and titanium. For example, when the active material is included in the negative electrode, the battery is completely discharged. As a result of this, the crystal condition of the active material can be observed. However, residual lithium ions may be present even in a discharged state. Subsequently, the battery is decomposed, and the electrode is taken out in a glove box filled with argon. The electrode taken out is washed with an adequate solvent. For example, ethyl methyl carbonate may be used. The washed electrode is cut to the size almost equal to the area of the holder of a powder x-ray diffraction apparatus, and used as the sample for measurement. The sample is affixed directly to the glass holder, and measured. At this time, the position of the peak originated from the current collector such as metal foil is measured in advance. In addition, the peaks of the components such as a conductive agent and a binder are also measured in advance. When the peaks of the current collector and active material overlap, it is preferred that the layer containing the active material (e.g., the below-described active material layer) be separated from the current collector, and subjected to measurement. This is a process for separating the overlapping peaks when the peak intensity is quantitatively measured. For example, the active material layer can be separated by irradiating the current collector with an ultrasonic wave in a solvent. The active material layer is sealed into the capillary, mounted on the rotary sample table, and measured. As a result of this process, the XRD pattern of the active material is obtained with the influence of the orientation reduced. The XRD pattern obtained at this time must be applicable to Rietveld analysis. In order to collect the data for Rietveld analysis, the measurement time or x-ray intensity is appropriately adjusted in such a manner that the step width is made 1/3 to 1/5 the minimum half width of the diffraction peaks, and the intensity at the peak position of highest reflected intensity is from 5,000 to 10,000 counts.

The XRD pattern thus obtained is analyzed by the Rietveld method. In the Rietveld method, the diffraction pattern is calculated from the model of the crystal structured which has been predicted in advance. The parameters of the crystal structure (e.g., lattice constant, atomic coordinate, and occupancy) can be precisely analyzed by fitting all the calculated values and measurement values. As a result of this, the characteristics of the crystal structure of the synthesized oxide are determined. In addition, by separating the occupancy of constituent elements in each site and the peak derived from the crystal phase between the first niobium titanium composite oxide and the second niobium titanium composite oxide, the mixing ratio thereof can quantitatively be examined. A fitting parameter S is used as a measure for estimating the degree of agreement between an observation strength and a calculation strength in the Rietveld analysis. The analysis needs to be performed such that the parameter S becomes smaller than 1.8. In addition, when the occupancy in each site is determined, a standard deviation σⱼ has to be taken into account. It is assumed that the fitting parameter S and standard deviation σⱼ defined here are estimated by mathematical expressions described in Non-Patent Literature "Izumi Nakai and Fujio Izumi, ACTUAL POWDER X-RAY ANALYSIS", X-ray Analysis Research Meeting of Japan Society for Analytical Chemistry (Asakura Shoten), published on July 10, 2009" (pages 97 to 115). By this method, it is possible to calculate the Nb occupancy in the 4i occupied site in KₐNb₂-_{b}M_{b}Ti_{c}O₇ (0 ≤ a ≤ 1, 0 ≤ b ≤ 1, 0 ≤ c < 1) that is the first niobium titanium composite oxide according to the approach.

In addition, in order to examine the element composition ratio in the first niobium titanium composite oxide and the second niobium titanium composite oxide according to the approach, it is also possible to use a transmission electron microscope and energy dispersive X-ray spectroscopy. Thereby, the composition can be examined for each particle from mapping analysis for each target element.

According to the first approach, the active material can be provided. The active material includes the first niobium titanium composite oxide expressed by the general formula (I) and the second niobium titanium composite oxide expressed by the general formula (II) and having the rutile-type crystal structure. The first niobium titanium composite oxide belongs to the space group C2/m and has the difference Δp between the maximum value and minimum value of the Nb occupancy in the 4i site, the difference Δp being 0.50 ≤ Δp ≤ 0.80.

KₐNb_{2-b}M_{b+1-c}Ti_{c}O₇ ... (I)

Ti_{1-y}Nb_{y}O_{z} ... (II)

In the general formula (I), M is at least one element selected from the group consisting of P, Mo, W, Fe and Ta, a satisfies 0 ≤ a ≤ 1, b satisfies 0 ≤ b ≤ 1, and c satisfies 0 < c ≤ 1. In the general formula (II), y satisfies 0 < y < 0.5, and z satisfies 2.0 ≤ z < 2.5.

According to the above-described active material, since the electron correlation between the lithium ions and the oxide ions in the first niobium titanium composite oxide can be weakened, the mobility of lithium ions can be enhanced. In addition, since the second niobium titanium composite oxide includes niobium, the skeleton structure between the metal ions and the oxide ions can be strengthened, compared to the case in which the second niobium titanium composite oxide includes only titanium, and the crystal structure during charge and discharge is stabilized. As a result, the active material has an excellent repetitive quick charge-and-discharge performance, and can consistently achieve both a high energy density and a high-temperature durability.

### (Second Embodiment)

According to a second approach, an electrode is provided.

The electrode according to the second approach includes the active material according to the first approach. The electrode according to the approach may be a negative electrode or a positive electrode. The electrode according to the approach is, for example, an electrode for a battery, an electrode for a secondary battery, or an electrode for a lithium secondary battery. The electrode may be a negative electrode which includes the active material according to the first approach as a negative electrode material.

The electrode according to the second approach can include a current collector and an active material-containing layer. The active material-containing layer may be formed on one surface or on both surfaces of the current collector. The active material-containing layer can include an active material, and, discretionarily, a conductive agent and a binder.

The active material-containing layer may singly include the active material according to the first approach, or may include two or more kinds of the active material according to the first approach. Besides, the active material-containing layer may include a mixture of one kind of, or two or more kinds of, the active material according to the first approach, and one kind of, or two or more kinds of, some other active material.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, and graphite. One of these may be used as the electro-conductive agent, or two or more may be used in combination as the electro-conductive agent. Alternatively, instead of using an electro-conductive agent, a carbon coating or an electro-conductive inorganic material coating may be applied to the surface of the active material particle.

The binder is added to fill gaps among the dispersed active material and also to bind the active material with the current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of these may be used as the binder, or two or more may be used in combination as the binder.

The blending proportion of active material, electro-conductive agent and binder in the active material-containing layer may be appropriately changed according to the use of the electrode. For example, in the case of using the electrode as a negative electrode of a secondary battery, the active material, electro-conductive agent and binder in the active material-containing layer are preferably blended in proportions of 68% by mass to 96% by mass, 2% by mass to 30% by mass, and 2% by mass to 30% by mass, respectively. When the amount of electro-conductive agent is 2% by mass or more, the current collection performance of the active material-containing layer can be improved. When the amount of binder is 2% by mass or more, binding between the active material-containing layer and current collector is sufficient, and excellent cycling performances can be expected. On the other hand, an amount of each of the electro-conductive agent and binder is preferably 30% by mass or less, in view of increasing the capacity.

There may be used for the current collector, a material which is electrochemically stable at the potential (vs. Li/Li⁺) at which lithium (Li) is inserted into and extracted from active material. For example in the case where the active material is used as a negative electrode material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 µm to 20 um. The current collector having such a thickness can maintain balance between the strength and weight reduction of the electrode.

The current collector may include a portion where the active material-containing layer is not formed on a surface of the current collector. This portion may serve as an electrode tab.

The electrode may be produced by the following method, for example. First, active material according to the approach, electro-conductive agent, and binder are suspended in a solvent to prepare a slurry. The slurry is applied onto one surface or both of reverse surfaces of a current collector. Next, the applied slurry is dried to form a layered stack of active material-containing layer and current collector. Then, the layered stack is subjected to pressing. The electrode can be produced in this manner.

Alternatively, the electrode may also be produced by the following method. First, active material, electro-conductive agent, and binder are mixed to obtain a mixture. Next, the mixture is formed into pellets. Then the electrode can be obtained by arranging the pellets on the current collector.

The electrode according to the second approach includes the active material according to the first approach. Therefore, the electrode has a high energy density, and can consistently achieve both an excellent high-temperature durability and an excellent quick charge-and-discharge performance.

### (Third Embodiment)

According to a third approach, a secondary battery including a negative electrode, a positive electrode and an electrolyte is provided. The secondary battery includes the electrode according to the second approach as the negative electrode.

The secondary battery according to the approach may further include a separator provided between the positive electrode and the negative electrode. The negative electrode, the positive electrode, and the separator can structure an electrode group. The electrolyte may be held in the electrode group.

The secondary battery may further include a container member that houses the electrode group and the electrolyte.

Further, the secondary battery may further include a negative electrode terminal electrically connected to the negative electrode and a positive electrode terminal electrically connected to the positive electrode.

The secondary battery may be, for example, a lithium ion secondary battery. The secondary battery also includes nonaqueous electrolyte secondary batteries containing nonaqueous electrolyte(s).

Hereinafter, the negative electrode, the positive electrode, the electrolyte, the separator, the container member, the negative electrode terminal, and the positive electrode terminal will be described in detail.

### (1) Negative Electrode

The negative electrode may include a negative electrode current collector and a negative electrode active material-containing layer. The negative electrode current collector and the negative electrode active material-containing layer may be respectively a current collector and an active material-containing layer that may be included in the electrode according to the second approach. The negative electrode active material-containing layer contains the active material according to the first approach as a negative electrode active material.

Of the details of the negative electrode, parts overlapping with the details described in the second approach are omitted.

The density of the negative electrode active material-containing layer (excluding the current collector), that is, the electrode density is preferably from 1.8 g/cm³ to 3.5 g/cm³. The negative electrode, in which the density of the negative electrode active material-containing layer is within this range, is excellent in energy density and ability to hold the electrolyte. The density of the negative electrode active material-containing layer is more preferably from 2.5 g/cm³ to 2.9 g/cm³.

The negative electrode may be produced by a method similar to that for the electrode according to the second approach, for example.

### (2) Positive Electrode

The positive electrode may include a positive electrode current collector and a positive electrode active material-containing layer. The positive electrode active material-containing layer may be formed on one surface or both of reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one kind of compound as the positive electrode active material, or include two or more kinds of compounds in combination. Examples of the oxide and sulfide include compounds capable of having Li and Li ions be inserted and extracted.

Examples of such compounds include manganese dioxides (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y < 1, and LixCoPO4; 0 < x ≤ 1), iron sulfates [Fe2(SO4)₃], vanadium oxides (e.g., V₂O₅), and lithium nickel cobalt manganese composite oxides (LiₓNi_{1-y}-_{z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxides (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiₓNi_{1-y-z}Co_{y}Mn_{z}O₂; 0 < x ≤ 1, 0 < y < 1, 0 < z < 1, y + z < 1). The positive electrode potential can be made high by using these positive electrode active materials.

When a room temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The primary particle size of the positive electrode active material is preferably from 100 nm to 1 um. The positive electrode active material having a primary particle size of 100 nm or more is easy to handle during industrial production. In the positive electrode active material having a primary particle size of 1 µm or less, diffusion of lithium ions within solid can proceed smoothly.

The specific surface area of the positive electrode active material is preferably from 0.1 m²/g to 10 m²/g. The positive electrode active material having a specific surface area of 0.1 m²/g or more can secure sufficient sites for inserting and extracting Li ions. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluorine rubber, polyacrylate compounds, imide compounds, carboxymethyl cellulose (CMC), and salts of CMC. One of these may be used as the binder, or two or more may be used in combination as the binder.

The electro-conductive agent is added to improve current collection performance and to suppress the contact resistance between the positive electrode active material and the positive electrode current collector. Examples of the electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, the decomposition of an electrolyte can be reduced during storage under high temperatures.

The positive electrode current collector is preferably an aluminum foil, or an aluminum alloy foil containing one or more elements selected from the group consisting of Mg, Ti, Zn, Ni, Cr, Mn, Fe, Cu, and Si.

The thickness of the aluminum foil or aluminum alloy foil is preferably from 5 µm to 20 um, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface of the positive electrode current collector. This portion may serve as a positive electrode tab.

The positive electrode may be produced by a method similar to that for the electrode according to the second approach, for example, using a positive electrode active material.

### (3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); γ-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions, a polymer solid electrolyte, an inorganic solid electrolyte, or the like may be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

The electrolyte may also be an aqueous electrolyte containing water.

The aqueous electrolyte includes an aqueous solvent and an electrolyte salt. The aqueous electrolyte is liquid, for example. A liquid aqueous electrolyte is an aqueous solution prepared by dissolving an electrolyte salt as the solute in an aqueous solvent. The aqueous solvent is a solvent containing 50% or more water by volume, for example. The aqueous solvent may also be pure water.

The aqueous electrolyte may also be an aqueous gel composite electrolyte containing an aqueous electrolytic solution and a polymer material. The polymer material may be, for example, polyvinylidene fluoride (PVDF), polyacrylonitrile (PAN), or polyethylene oxide (PEO).

The aqueous electrolyte preferably contains 1 mol or greater of aqueous solvent per 1 mol of the salt as the solute. In an even more preferably aspect, the aqueous electrolyte contains 3.5 mol or greater of aqueous solvent per 1 mol of the salt as the solute.

That the aqueous electrolyte contains water can be confirmed by gas chromatography - mass spectrometry (GC-MS) measurement. Also, the salt concentration and the amount of water contained in the aqueous electrolyte can be computed by measurement using inductively coupled plasma (ICP) emission spectroscopy or the like, for example. By measuring out a prescribed amount of the aqueous electrolyte and computing the contained salt concentration, the molar concentration (mol/L) can be computed. Also, by measuring the specific gravity of the aqueous electrolyte, the number of moles of the solute and the solvent can be computed.

The aqueous electrolyte is prepared by dissolving the electrolyte salt into the aqueous solvent at a concentration from 1 to 12 mol/L for example.

To suppress electrolysis of the aqueous electrolyte, LiOH, Li₂SO₄, or the like can be added to adjust the pH. The pH is preferably from 3 to 13, and more preferably from 4 to 12.

### (4) Separator

The separator is formed of, for example, a porous film containing polyethylene (polyethylene; PE), polypropylene (polypropylene; PP), cellulose, or polyvinylidene fluoride (PVdF), or a synthetic resin nonwoven fabric. From the viewpoint of safety, it is preferable to use a porous film formed from polyethylene or polypropylene. This is because these porous films can be melted at a predeterminedtemperature to interrupt the current.

As a separator, a solid electrolyte layer containing solid electrolyte particles can also be used. The solid electrolyte layer may contain one kind of solid electrolyte particles, or may contain a plurality of kinds of solid electrolyte particles. The solid electrolyte layer may be a solid electrolyte composite film containing solid electrolyte particles. The solid electrolyte composite film is, for example, formed by molding solid electrolyte particles into a film shape using a polymer material. The solid electrolyte layer may contain at least one selected from the group consisting of plasticizers and electrolyte salts. When the solid electrolyte layer contains an electrolyte salt, for example, the alkali metal ion conductivity of the solid electrolyte layer can be further enhanced.

Examples of the polymer material include polyether-based, polyester-based, polyamine-based, polyethylene-based, silicone-based and polysulfide-based polymer materials.

As the solid electrolyte, it is preferable to use an inorganic solid electrolyte. Examples of the inorganic solid electrolyte include an oxide-based solid electrolyte and a sulfide-based solid electrolyte. As the oxide-based solid electrolyte, it is preferable to use a lithium phosphate solid electrolyte having a NASICON type structure and represented by the general formula LiM₂(PO₄)₃. M in the above general formula is preferably at least one kind of element selected from the group consisting of titanium (Ti), germanium (Ge), strontium (Sr), zirconium (Zr), tin (Sn), and aluminum (Al). It is more preferable that the element M contain any one element of Ge, Zr and Ti, and Al.

Specific examples of the lithium phosphate solid electrolyte having a NASICON type structure can include LATP (Li₁₊ₓAlₓTi₂₋ₓ (PO₄)₃), Li₁₊ₓAlₓGe₂₋ₓ(PO₄)₃, and Li₁₊ₓAlₓZr₂₋ₓ(PO₄)₃. In the above formulae, x is in the range of 0 <x ≤ 5, preferably in the range of 0.1 ≤ x ≤ 0.5. It is preferable to use LATP as the solid electrolyte. LATP has excellent water resistance and is less likely to cause hydrolysis in a secondary battery.

Further, as the oxide-based solid electrolyte, amorphous LIPON (Li_{2.9}PO_{3.3}N_{0.46}) or LLZ (Li₇La₃Zr₂O₁₂) having a garnet-type structure may be used.

### (5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), square, cylinder, coin, or button-shaped. The container member may be appropriately selected depending on battery size and use of the battery.

### (6) Negative electrode Terminal

The negative electrode terminal may be made of a material that is electrochemically stable at the potential at which Li is inserted into and extracted from the above-described negative electrode active material, and has electrical conductivity. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

### (7) Positive Electrode Terminal

The positive electrode terminal may be made of, for example, a material that is electrically stable in the potential range of 3 V to 5 V (vs. Li/Li⁺) relative to the redox potential of lithium, and has electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance with the positive electrode current collector.

Next, the secondary battery according to the third approach will be more specifically described with reference to the drawings.

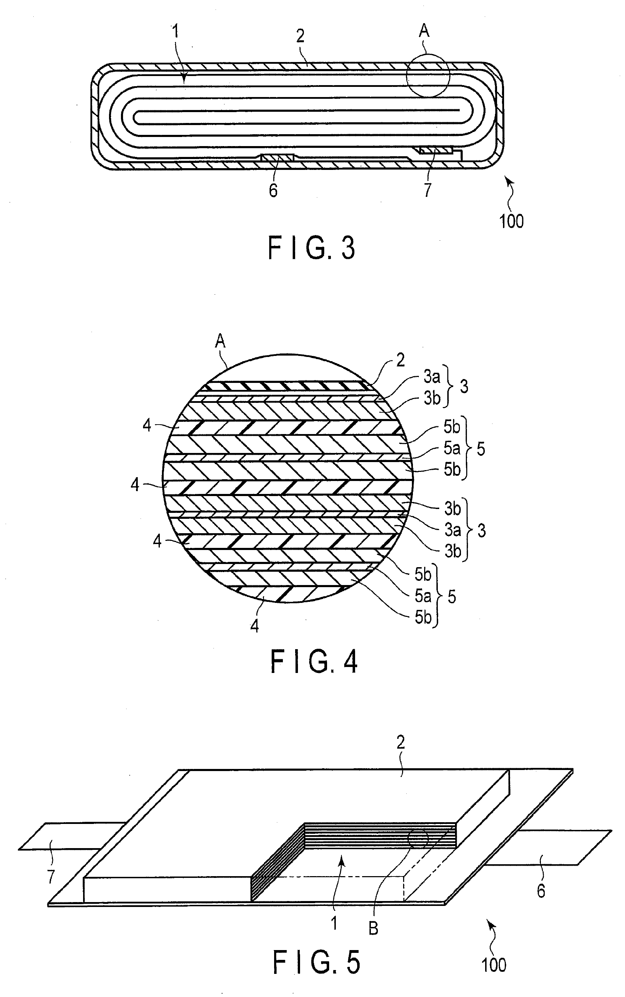

FIG. 3 is a cross-sectional view schematically showing an example of a secondary battery according to the third approach. FIG. 4 is an enlarged cross-sectional view of section A of the secondary battery shown in FIG. 3.

The secondary battery 100 shown in FIGS. 3 and 4 includes a bag-shaped container member 2 shown in FIGS. 3 and 54 an electrode group 1 shown in FIG. 3, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 3, the electrode group 1 is a wound electrode group in a flat form. The wound electrode group 1 in a flat form includes a negative electrode 3, a separator 4, and a positive electrode 5, as shown in FIG. 4. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 4. For the other portions of the negative electrode 3, negative electrode active material-containing layers 3b are formed on both of reverse surfaces of the negative electrode current collector 3a.

The positive electrode 5 includes a positive electrode current collector 5a and positive electrode active material-containing layers 5b formed on both of reverse surfaces of the positive electrode current collector 5a.

As shown in FIG. 3, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

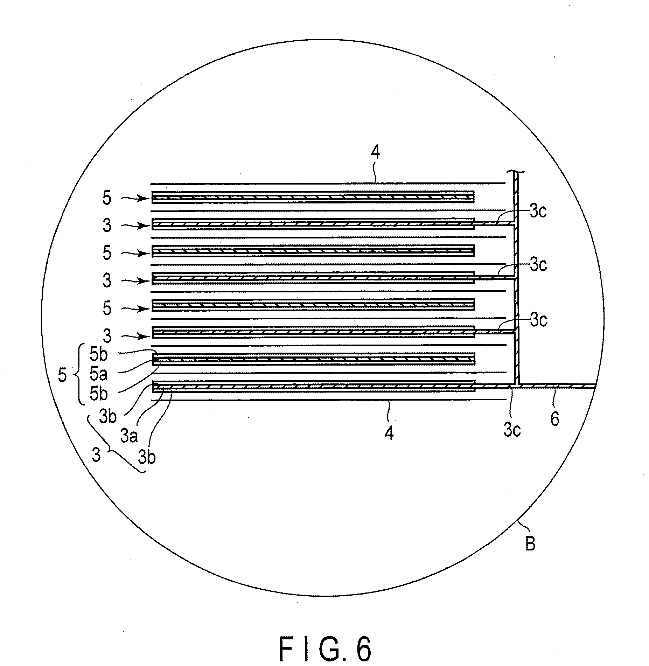

The secondary battery according to the third approach is not limited to the secondary battery of the structure shown in FIGS. 3 and 4, and may be, for example, a battery of a structure as shown in FIGS. 5 and 6.

FIG. 5 is a partially cut-out perspective view schematically showing another example of a secondary battery according to the third approach. FIG. 6 is an enlarged cross-sectional view of section B of the secondary battery shown in FIG. 5.

The secondary battery 100 shown in FIGS. 5 and 6 includes an electrode group 1 shown in FIGS. 5 and 6, a container member 2 shown in FIG. 5, and an electrolyte, which is not shown. The electrode group 1 and the electrolyte are housed in the container member 2. The electrolyte is held in the electrode group 1.

The container member 2 is made of a laminate film including two resin layers and a metal layer sandwiched between the resin layers.

As shown in FIG. 6, the electrode group 1 is a stacked electrode group. The stacked electrode group 1 has a structure in which and negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at one end, a portion 3c where the negative electrode active material-containing layer 3b is not supported on either surface. This portion 3c serves as a negative electrode tab. As shown in FIG. 6, the portions 3c serving as the negative electrode tabs do not overlap the positive electrodes 5. The plural negative electrode tabs (portions 3c) are electrically connected to the strip-shaped negative electrode terminal 6. A tip of the strip-shaped negative electrode terminal 6 is drawn to the outside from the container member 2.

Although not shown, the positive electrode current collector 5a of each of the positive electrodes 5 includes at one end, a portion where the positive electrode active material-containing layer 5b is not supported on either surface. This portion serves as a positive electrode tab. Like the negative electrode tabs (portion 3c), the positive electrode tabs do not overlap the negative electrodes 3. Further, the positive electrode tabs are located on the opposite side of the electrode group 1 with respect to the negative electrode tabs (portion 3c). The positive electrode tabs are electrically connected to the strip-shaped positive electrode terminal 7. A tip of the strip-shaped positive electrode terminal 7 is located on the opposite side relative to the negative electrode terminal 6 and drawn to the outside from the container member 2.

The secondary battery according to the third approach includes the active material according to the first approach as a negative electrode active material. Therefore, the secondary battery has a high energy density, and can consistently achieve both an excellent high-temperature durability and an excellent quick charge-and-discharge performance.

### (Fourth Embodiment)

According to a fourth approach, a battery module is provided. The battery module according to the fourth approach includes plural secondary batteries according to the third approach.

In the battery module according to the fourth approach, each of the single batteries may be arranged electrically connected in series, in parallel, or in a combination of in-series connection and in-parallel connection.

An example of the battery module according to the fourth approach will be described next with reference to the drawings.

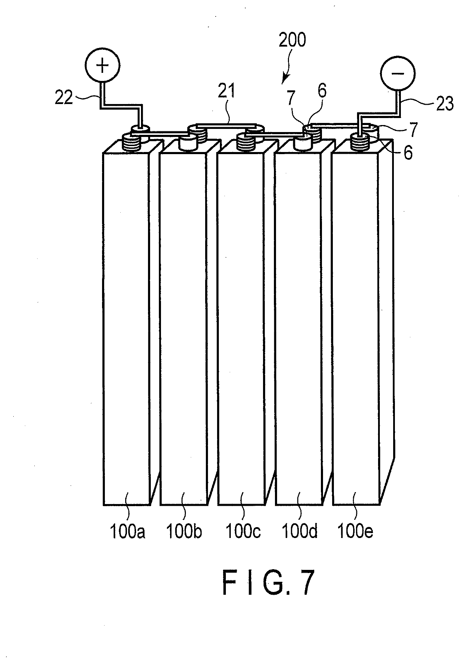

FIG. 7 is a perspective view schematically showing an example of the battery module according to the fourth approach. A battery module 200 shown in FIG. 7 includes five single-batteries 100a to 100e, four bus bars 21, a positive electrode-side lead 22, and a negative electrode-side lead 23. Each of the five single-batteries 100a to 100e is a secondary battery according to the third approach.

The bus bars 21 connects a negative electrode terminal 6 of a single unit cell 100a to a positive electrode terminal 7 of an adjacently positioned unit cell 100b. In this way, the five unit cells 100a to 100e are connected in series by the four bus bars 21. That is, the battery module 200 shown in FIG. 7 is a battery module of five in-series connection. Although an example is not illustrated, in a battery module containing a plurality of unit cells electrically connected in parallel, the plurality of unit cells may be electrically connected by connecting the plurality of negative electrode terminals to each other with busbars and also connecting the plurality of positive electrode terminals to each other with busbars, for example.

The positive electrode terminal 7 of at least one battery among the five unit cells 100a to 100e is electrically connected to a positive electrode lead 22 for external connection. Also, the negative electrode terminal 6 of at least one battery among the five unit cells 100a to 100e is electrically connected to a negative electrode lead 23 for external connection.

The battery module according to the fourth approach includes the secondary battery according to the third approach. Therefore, the battery module has a high energy density, and can consistently achieve both an excellent high-temperature durability and an excellent quick charge-and-discharge performance.

### (Fifth Embodiment)

According to the fifth approach, a battery pack is provided. The battery pack includes the battery module according to the fourth approach. The battery pack may also be equipped with a single secondary battery according to the third approach instead of the battery module according to the fourth approach.

The battery pack according to the fifth approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the fifth approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of a motive force of vehicles such as automobiles) is provided to the battery pack via the external power distribution terminal.

Next, an example of a battery pack according to the fifth approach will be described with reference to the drawings.

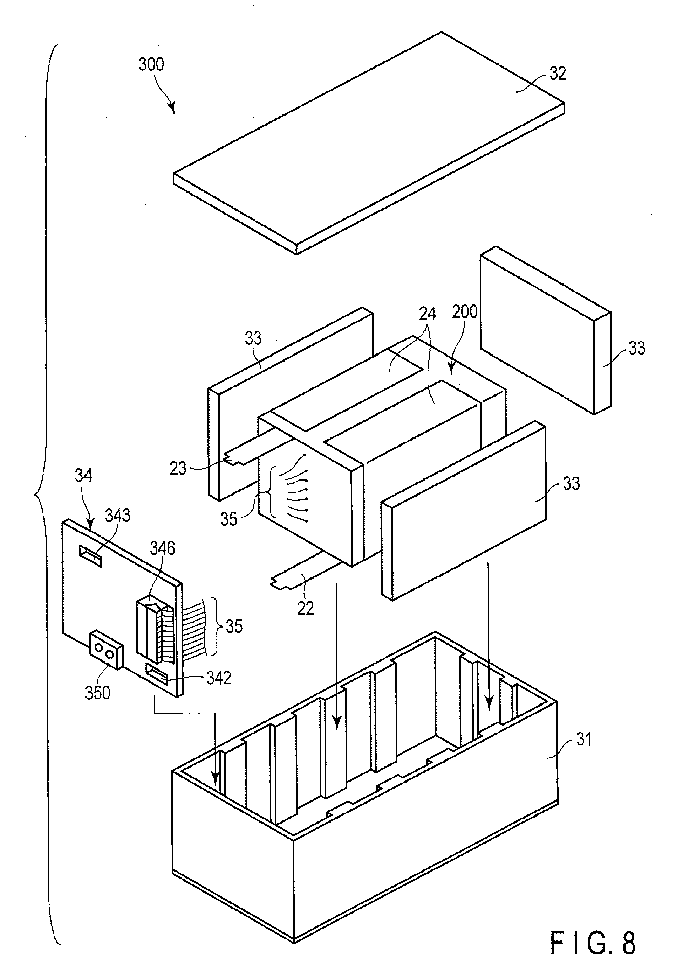

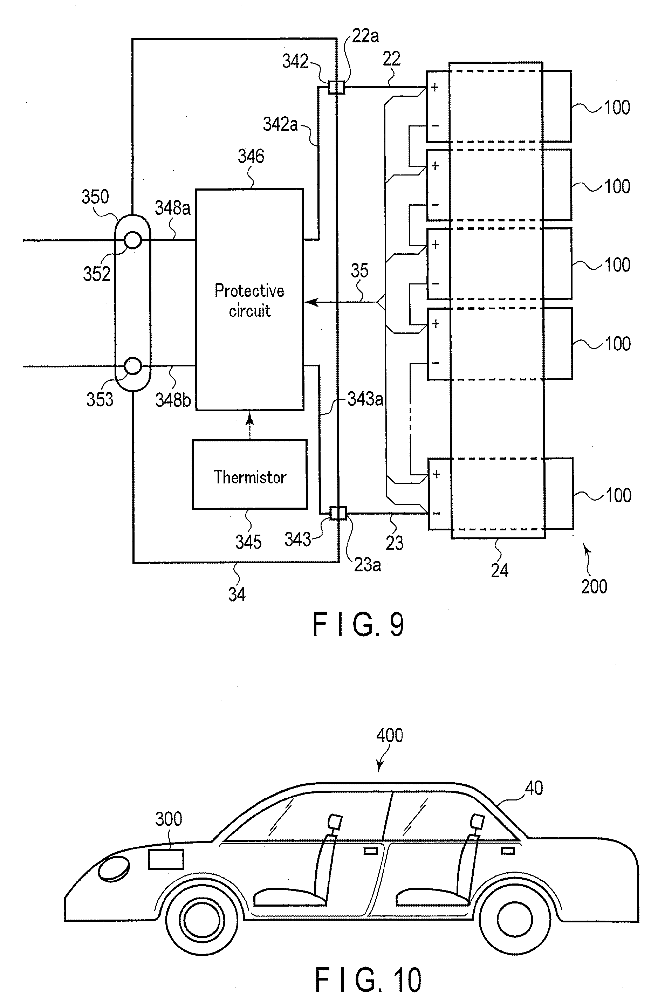

FIG. 8 is an exploded perspective view schematically showing an example of the battery pack according to the fifth approach. FIG. 9 is a block diagram showing an example of an electric circuit of the battery pack shown in FIG. 8.

A battery pack 300 shown in FIGS. 8 and 9 includes a housing container 31, a lid 32, protective sheets 33, a battery module 200, a printed wiring board 34, wires 35, and an insulating plate (not shown).

A housing container 31 shown in FIG. 8 is a bottomed-square-shaped container having a rectangular bottom surface. The housing container 31 is configured to house protective sheet 33, a battery module 200, a printed wiring board 34, and wires 35. A lid 32 has a rectangular shape. The lid 32 covers the housing container 31 to house the battery module 200 and the like. Although not shown, opening(s) or connection terminal(s) for connecting to external device(s) and the like are provided on the housing container 31 and lid 32.

The battery module 200 includes plural unit cells 100, a positive electrode-side lead 22, a negative electrode-side lead 23, and an adhesive tape 24.

At least one in the plurality of unit cells 100 is a secondary battery according to the second approach. Each unit cell 100 in the plurality of unit cells 100 is electrically connected in series, as shown in FIG. 9. The plurality of unit cells 100 may alternatively be electrically connected in parallel, or connected in a combination of in-series connection and in-parallel connection. If the plurality of unit cells 100 is connected in parallel, the battery capacity increases as compared to a case where they are connected in series.

The adhesive tape 24 fastens the plural unit cells 100. The plural unit cells 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural unit cells 100.

One terminal of a positive electrode lead 22 is connected to a battery module 200. One terminal of the positive electrode lead 22 is electrically connected to the positive electrode of one or more unit cells 100. One terminal of a negative electrode lead 23 is connected to the battery module 200. One terminal of the negative electrode lead 23 is electrically connected to the negative electrode of one or more unit cells 100.

The printed wiring board 34 is arranged on the inner surface of the housing container 31 along the short side direction. The printed wiring board 34 includes a positive electrode connector 342, a negative electrode connector 343, a thermistor 345, a protective circuit 346, wirings 342a and 343a, an external power distribution terminal 350, a plus-side wire (positive-side wire) 348a, and a minus-side wire (negative-side wire) 348b. One principal surface of the printed wiring board 34 faces one side surface of the battery module 200. An insulating plate (not shown) is disposed in between the printed wiring board 34 and the battery module 200.

The other terminal 22a of the positive electrode lead 22 is electrically connected to a positive electrode connector 342. The other terminal 23a of the negative electrode lead 23 is electrically connected to a negative electrode connector 343.

The thermistor 345 is fixed to one principal surface of the printed wiring board 34. The thermistor 345 detects the temperature of each unit cell 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive side terminal 352 and a negative side terminal 353.

The protective circuit 346 is fixed to the other principal surface of the printed wiring board 34. The protective circuit 346 is connected to the positive side terminal 352 via the plus-side wire 348a. The protective circuit 346 is connected to the negative side terminal 353 via the minus-side wire 348b. In addition, the protective circuit 346 is electrically connected to the positive electrode connector 342 via the wiring 342a. The protective circuit 346 is electrically connected to the negative electrode connector 343 via the wiring 343a. Furthermore, the protective circuit 346 is electrically connected to each unit cell 100 in the plurality of unit cells 100 via the wires 35.

The protective sheets 33 are arranged on both inner surfaces of the housing container 31 along the long side direction and on one inner surface of the housing container 31 along the short side direction facing the printed wiring board 34 through the battery module 200. The protective sheet 33 is made of, for example, resin or rubber.

The protective circuit 346 controls charging and discharging of the plurality of unit cells 100. The protective circuit 346 is also configured to cut off electric connection between the protective circuit 346 and the external power distribution terminal 350 (the positive side terminal 352 and the negative side terminal 353) to the external devices, based on detection signals transmitted from the thermistor 345 or detection signals transmitted from each unit cell 100 or the battery module 200.

An example of the detection signal transmitted from the thermistor 345 is a signal indicating that the temperature of the unit cell(s) 100 is detected to be a predetermined temperature or more. An example of the detection signal transmitted from each unit cell 100 or the battery module 200 is a signal indicating detection of over-charge, over-discharge, and overcurrent of the unit cell(s) 100. When detecting over-charge or the like for each of the unit cells 100, the battery voltage may be detected, or a positive electrode potential or negative electrode potential may be detected. In the latter case, a lithium electrode to be used as a reference electrode may be inserted into each unit cell 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include a plurality of battery modules 200. In this case, the plurality of battery modules 200 may be connected in series, in parallel, or connected in a combination of in-series connection and in-parallel connection. The printed wiring board 34 and the wires 35 may be omitted. In this case, the positive electrode lead 22 and the negative electrode lead 23 may be used as the positive side terminal and the negative side terminal of the external power distribution terminal, respectively.

Such a battery pack is used for, for example, an application required to have the excellent cycle performance when a large current is taken out. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fifth approach includes the secondary battery according to the third approach, or the battery module according to the fourth approach. Therefore, the battery pack has a high energy density, and can consistently achieve both an excellent high-temperature durability and an excellent quick charge-and-discharge performance.

### (Sixth Embodiment)

According to the sixth approach, a vehicle is provided. The vehicle includes the battery pack according to the fifth approach.

In a vehicle according to the sixth approach, the battery pack is configured, for example, to recover regenerative energy from motive force of the vehicle. The vehicle may include a mechanism configured to convert kinetic energy of the vehicle into regenerative energy.

Examples of the vehicle according to the sixth approach include two- to four-wheeled hybrid electric automobiles, two- to four-wheeled electric automobiles, electric assist bicycles, and railway cars.

In the vehicle, the installing position of the battery pack is not particularly limited. For example, the battery pack may be installed in the engine compartment of the vehicle, in rear parts of the vehicle, or under seats.

A plurality of battery packs is loaded on the vehicle. In this case, the batteries included in each of the battery packs may be electrically connected to each other in series, in parallel, or in a combination of in-series connection and in-parallel connection. For example, in the case where each battery pack includes a battery module, the battery modules may be electrically connected to each other in series, in parallel, or in a combination of in-series connection and in-parallel connection. Alternatively, in the case where each battery pack includes a single battery, each of the batteries may be electrically connected to each other in series, in parallel, or in a combination of in-series connection and in-parallel connection.

Next, one example of the vehicle according to the sixth approach will be described with reference to the drawings.

FIG. 10 is a partially transparent diagram schematically illustrating one example of a vehicle according to the approach.

A vehicle 400 illustrated in FIG. 10 includes a vehicle body 40 and a battery pack 300 according to the approach. In the example illustrated in FIG. 10, the vehicle 400 is a four-wheeled automobile.

A plurality of the battery packs 300 may be loaded on the vehicle 400. In this case, the batteries included in the battery packs 300 (for example, unit cell or battery modules) may be connected in series, connected in parallel, or connected in a combination of in-series connection and in-parallel connection.

In FIG. 10, the battery pack 300 is installed in an engine compartment located at the front of the vehicle body 40. As described above, the battery pack 300 may be installed in rear sections of the vehicle body 40, or under a seat. The battery pack 300 may be used as a power source of the vehicle 400. In addition, the battery pack 300 can recover regenerative energy of a motive force of the vehicle 400.

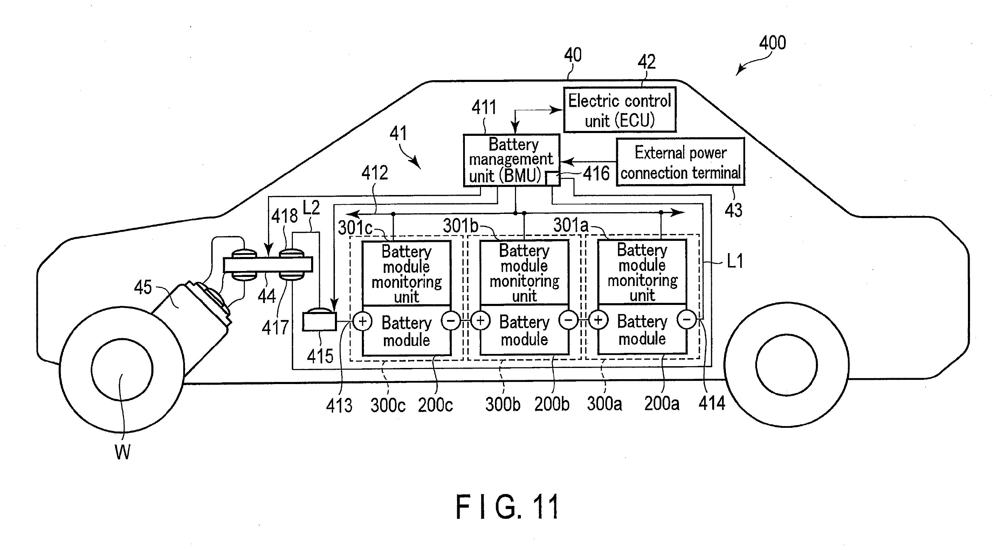

Next, an approach of the vehicle according to the sixth approach will be described with reference to FIG. 11.

FIG. 11 is a diagram schematically illustrating one example of a control system related to an electrical system in the vehicle according to the sixth approach. The vehicle 400 illustrated in FIG. 11 is an electric automobile.

The vehicle 400, shown in FIG. 11, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 9, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

A battery pack 300a is provided with a battery module 200a and a battery module monitoring apparatus 301a (for example, voltage temperature monitoring (VTM)). A battery pack 300b is provided with a battery module 200b and a battery module monitoring apparatus 301b. A battery pack 300c is provided with a battery module 200c and a battery module monitoring apparatus 301c. The battery packs 300a to 300c are battery packs similar to the battery pack 300 described earlier, and the battery modules 200a to 200c are battery modules similar to the battery module 200 described earlier. The battery modules 200a to 200c are electrically connected in series. The battery packs 300a, 300b, and 300c are removable independently of each other, and each can be replaced with a different battery pack 300.

Each of the battery modules 200a to 200c includes plural battery cells connected in series. At least one of the plural battery cells is the secondary battery according to the second approach. The battery modules 200a to 200c each perform charging and discharging via a positive electrode terminal 413 and a negative electrode terminal 414.

A battery management apparatus 411 communicates with the battery module monitoring apparatus 301a to 301c, and collects information related to the voltage, temperature, and the like for each of the unit cells 100 included in the battery modules 200a to 200c included in the vehicle power source 41. With this arrangement, the battery management apparatus 411 collects information related to the maintenance of the vehicle power source 41.

The battery management apparatus 411 and the battery module monitoring apparatus 301a to 301c are connected via a communication bus 412. In the communication bus 412, a set of communication wires are shared with a plurality of nodes (the battery management apparatus 411 and one or more of the battery module monitoring apparatus 301a to 301c). The communication bus 412 is a communication bus, for example, configured in accordance with the controller area network (CAN) standard.

The battery module monitoring units 301a to 301c measure a voltage and a temperature of each battery cell in the battery modules 200a to 200c based on commands from the battery management unit 411. It is possible, however, to measure the temperatures only at several points per battery module, and the temperatures of all of the battery cells need not be measured.

The vehicle power source 41 can also have an electromagnetic contactor (for example, a switch apparatus 415 illustrated in FIG. 11) that switches the presence or absence of an electrical connection between a positive electrode terminal 413 and a negative electrode terminal 414. The switch apparatus 415 includes a pre-charge switch (not illustrated) that turns on when the battery modules 200a to 200c are charged, and a main switch (not illustrated) that turns on when the output from the battery modules 200a to 200c is supplied to the load. Each of the pre-charge switch and the main switch is provided with a relay circuit (not illustrated) that switches on or off according to a signal supplied to a coil disposed near a switching element. The electromagnetic contactor such as the switch apparatus 415 is controlled according to of control signals from the battery management apparatus 411 or the vehicle ECU 42 that controls the entire operation of the vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management apparatus 411, or the vehicle ECU 42 which controls the entire operation of the vehicle. By controlling the inverter 44, the output voltage from the inverter 44 is adjusted.

The drive motor 45 is rotated by electric power supplied from the inverter 44. The driving force produced by the rotation of the drive motor 45 is transmitted to an axle (or axles) and drive wheels W via a differential gear unit for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connection line L1 is connected to the negative electrode terminal 414 of the vehicle power source 41. The other terminal of the connection line L1 is connected to a negative electrode input terminal 417 of the inverter 44. On the connection line L1, a current detector (current detection circuit) 416 is provided inside the battery management apparatus 411 between the negative electrode terminal 414 and the negative electrode input terminal 417.

One terminal of a connection line L2 is connected to the positive electrode terminal 413 of the vehicle power source 41. The other terminal of the connection line L2 is connected to a positive electrode input terminal 418 of the inverter 44. On the connection line L2, the switch apparatus 415 is provided between the positive electrode terminal 413 and the positive electrode input terminal 418.

The external terminal 43 is connected to the battery management apparatus 411. The external terminal 43 can be connected to, for example, an external power source.

The vehicle ECU 42 cooperatively controls the vehicle power source 41, the switch apparatus 415, the inverter 44, and the like together with other management apparatus and control apparatus, including the battery management apparatus 411, in response to operation input from a driver or the like. By the cooperative control by the vehicle ECU 42 and the like, the output of electric power from the vehicle power source 41, the charging of the vehicle power source 41, and the like are controlled, and the vehicle 400 is managed as a whole. Data related to the maintenance of the vehicle power source 41, such as the remaining capacity of the vehicle power source 41, is transferred between the battery management apparatus 411 and the vehicle ECU 42 by a communication line.

In the vehicle according to the six approach, the battery pack according to the fifth approach is mounted. Therefore, according to the present approach, there can be provided the vehicle in which the battery pack, which has a high energy density and can consistently achieve both an excellent high-temperature durability and an excellent quick charge-and-discharge performance, is mounted.

### [Examples]

Hereinafter, the above approaches will be described in greater detail, based on Examples. Note that the identification of the crystal phase of the synthesized monoclinic composite oxide and the estimation of the crystal structure were conducted by powder X-ray diffractometry using Cu-Kα rays. In addition, the composition of the product was analyzed by ICP method, and it was confirmed that the target object was obtained.

### (Example 1)

### <Precursor synthesis of the first niobium titanium composite oxide>

As will be described below, among composite oxides expressed by the general formula KₐNb_{2-b}M_{b+1-c}Ti_{c}O₇ (0 ≤ a ≤ 1, 0 ≤ b ≤ 1, 0 < c ≤ 1), monoclinic Nb₂TiO₇, in which a = 0, b = 0, and c = 1.0, was synthesized. As starting materials, commercially available oxide reagents, Nb₂O₅ and TiO₂, were used. These raw material oxides were weighed such that the molar ratio thereof becomes 1:1, and pulverized and mixed by a mortar until the average particle size becomes 3 um. Then, the mixture was put in a platinum crucible, and calcined in an electric furnace at 800°C for 12 hours. Thereafter, the mixture was subjected to first sintering at 1400°C for 10 hours. After being cooled to room temperatures, the resultant was mixed by the mortar and put in the electric furnace once again, and subjected to second sintering at 1400°C for 10 hours. Thereafter, the platinum crucible in which the obtained powder is put was placed in liquid nitrogen, and quickly cooled from the state at 1400°C, and thus a sample was obtained.

### <Powder X-ray diffractometry>

As regards the obtained sample, powder X-ray diffractometry was carried out as follows. To begin with, the target sample was pulverized to an average particle size of less than 5 um. The particle size distribution in the present Example was measured by using a laser diffractometer (NIKKISO-Microtrac Series MT3300, with a reflection method and ultrasonic radiation). The pulverized sample was filled in a holder portion with a depth of 0.2 mm formed on a glass sample plate. Then, the sample was smoothed by pressing another glass plate on the sample under a sufficient pressure from the outside.

Next, the glass plate filled with the sample was mounted on a powder X-ray diffraction apparatus, and a diffraction pattern was acquired by using Cu-Kα rays. To start with, in order to determine measurement conditions, measurement was carried out by a continuous method at an X-ray output of 40 kV, 100 mA, and a scan speed of 3 deg/min. As a result, since the minimum half width was 0.15 deg, 1/5 of this value, or 0.03 deg, was determined to be the step width. Next, main measurement was performed by an FT (Fixed Time) method, and the measurement time in each step was determined such that the intensity of the main peak becomes 10000 counts. The measured XRD data was subjected to Rietveld analysis, and the occupancy difference Δp of each Nb in the 4i site was examined. As a result, the Δp of the above sample was 0.01. Since this value is a measurement error level, it was understood that Nb is not maldistributed in the sample. The thus obtained sample was adopted as the precursor of the first niobium titanium composite oxide.

### <Synthesis of the second niobium titanium composite oxide>

Next, among rutile-type composite oxides expressed by the general formula Ti_{1-y}Nb_{y}O_{z} (0 < y < 0.5, 2.0 ≤ z < 2.5), Ti₀.₉₅Nb_{0.05}O₂, in which y = 0.05 and z = 2.0, was synthesized. As starting materials, commercially available oxide reagents, Nb₂O₅ and TiO₂, were used. These raw material oxides were weighed such that the molar ratio thereof becomes 1:1, and pulverized and mixed by a mortar until the average particle size becomes 3 µm. Then, the mixture was put in an electric furnace and calcined at 800°C for 12 hours. Thereafter, the mixture was subjected to sintering at 1000°C for 10 hours. The resultant was adopted as the second niobium titanium composite oxide.

### <Nb maldistribution process to the precursor of the first niobium titanium composite oxide>

Next, the following heat treatment was performed such that the difference Δp between the maximum value and the minimum value of the Nb occupancy in the 4i site of the obtained first niobium titanium composite oxide becomes 0.50 ≤ Δp ≤ 0.80. To begin with, the precursor of the first niobium titanium composite oxide and the second niobium titanium composite oxide were mixed at a molar ratio of 1:1, and were pulverized at 900 rpm for 10 minutes by using by an agate ball mill with a diameter of 10 mm. The mixture obtained by pulverization was annealed (heat-treated) at 500°C for one hour. Note that the composition of the precursor of the first niobium titanium composite oxide before being subjected to the Nb maldistribution process does not change even after the Nb maldistribution process was performed.

### <Powder X-ray diffractometry>

As regards the obtained sample, XRD was performed under the same measurement conditions as described above, and XRD data was obtained. Further, as regards the XRD data, Rietveld analysis was conducted, and the occupancy difference Δp of each Nb in the 4i site was examined. As a result, the Δp was 0.58, and it was confirmed that Nb is maldistributed in the 4i site. In addition, from the quantitative measurement of the Rietveld analysis, the mixing ratio between the first niobium titanium composite oxide and the second niobium titanium composite oxide was 1:1. The thus obtained sample was adopted as an active material of Example 1.

### (Example 2)

### <Precursor synthesis of the first niobium titanium composite oxides

Among composite oxides expressed by the general formula KₐNb_{2-b}M_{b+1-c}Ti_{c}O₇ (0 ≤ a ≤ 1, 0 ≤ b ≤ 1, 0 < c ≤ 1), K_{0.004}Nb₂Ti_{0.999}O₇, in which a = 0.004, b = 0, and c = 0.999, was synthesized. K_{0.004}Nb₂Ti_{0.999}O₇ had a monoclinic crystal structure. As starting materials, commercially available oxide reagents, Nb₂O₅, TiO₂, and K₂CO₃ were used. The precursor of the first niobium titanium composite oxide was synthesized by the same method as in Example 1, except that these raw material oxides were weighed so as to have a molar ratio of the target composition.

### <Synthesis of the second niobium titanium composite oxide>

Ti_{0.95}Nb_{0.05}O₂ was synthesized by the same method as in Example 1.

### <Nb maldistribution process in the precursor of the first niobium titanium composite oxide>

The maldistribution process of Nb was carried out by the same method as in Example 1, except that K_{0.004}Nb₂Ti_{0.999}O₇ was used as the precursor of the first niobium titanium composite oxide. According to Example 2, since the melting point of the first niobium titanium composite oxide lowers due to the presence of K, it is understood that the maldistribution amount of Nb increases even in the same process. The thus obtained sample was adopted as an active material of Example 2.

### (Example 3)

### <Precursor synthesis of the first niobium titanium composite oxide>

Among composite oxides expressed by the general formula KₐNb_{2-b}M_{b+1-c}Ti_{c}O₇ (0 ≤ a ≤ 1, 0 ≤ b ≤ 1, 0 < c ≤ 1), KNbTi_{0.75}O₇, in which a = 1.0, b = 0, and c = 0.75, was synthesized as the precursor of the first niobium titanium composite oxide by the same method as in Example 1. KNb₂Ti_{0.75}O₇ had a monoclinic crystal structure.

### <Synthesis of the second niobium titanium composite oxide>

Ti_{0.01}Nb_{0.99}O_{2.495}, in which y = 0.99 and z = 2.495 in the general formula Ti_{1-y}Nb_{y}O_{z} (0 < y < 0.5, 2.0 ≤ z < 2.5), was synthesized by the same method as in Example 1.

### <Nb maldistribution process in the precursor of the first niobium titanium composite oxide>

The Nb maldistribution process was carried out by the same method as in Example 1, except that KNbTi_{0.75}O₇ was used as the precursor of the first niobium titanium composite oxide, and Ti_{0.01}Nb_{0.99}O_{2.495} was used as the second niobium titanium composite oxide. According to Example 3, since the melting point of the first niobium titanium composite oxide lowers due to the presence of K, it is understood that the maldistribution amount of Nb increases even in the same process. The thus obtained sample was adopted as an active material of Example 3.

### (Example 4)

The Nb maldistribution process was carried out by the same method as in Example 1, except that Nb_{1.999}Ta_{0.001}TiO₇ was used as the precursor of the first niobium titanium composite oxide. The thus obtained sample was adopted as an active material of Example 4.

### (Examples 5 to 8)

Active materials were synthesized by the same method as in Example 4, except that, in a stage in which the Nb maldistribution process is carried out, the mixture molar ratio between the precursor of the first niobium titanium composite oxide and the second niobium titanium composite oxide was changed as indicated in Table 2 below.

### (Example 9)

The Nb maldistribution process was carried out by the same method as in Example 1, except that NbTaTiO₇ was used as the precursor of the first niobium titanium composite oxide, and Ti_{0.9}Nb_{0.1}O_{2.05} was used as the second niobium titanium composite oxide. The thus obtained sample was adopted as an active material of Example 9. In Example 9 and Example 11 that will be described later, it is understood that the randomization of Nb is promoted by the influence of Ta that is included in place of Nb, and the degree of maldistribution decreases.

### (Example 10)

The Nb maldistribution process was carried out by the same method as in Example 1, except that Nb_{1.9}Ta_{0.1}TiO₇ was used as the precursor of the first niobium titanium composite oxide, and Ti_{0.5}Nb_{0.5}O_{2.25} was used as the second niobium titanium composite oxide. The thus obtained sample was adopted as an active material of Example 10.

### (Example 11)

The Nb maldistribution process was carried out by the same method as in Example 1, except that Nb_{1.5}Ta_{0.5}TiO₇ was used as the precursor of the first niobium titanium composite oxide, and Ti_{0.3}Nb_{0.7}O_{2.35} was used as the second niobium titanium composite oxide. The thus obtained sample was adopted as an active material of Example 11.

### (Example 12)

The Nb maldistribution process was carried out by the same method as in Example 1, except that Nb_{1.1}W_{0.9}Fe_{0.9}Ti_{0.1}O₇ was used as the precursor of the first niobium titanium composite oxide. The thus obtained sample was adopted as an active material of Example 12.

### (Example 13)

The Nb maldistribution process was carried out by the same method as in Example 1, except that Nb_{1.1}Mo_{0.9}Fe_{0.9}Ti_{0.1}O₇ was used as the precursor of the first niobium titanium composite oxide. The thus obtained sample was adopted as an active material of Example 13.

### (Example 14)

The Nb maldistribution process was carried out by the same method as in Example 1, except that Nb_{1.999}P_{0.001}TiO₇ was used as the precursor of the first niobium titanium composite oxide. The thus obtained sample was adopted as an active material of Example 14.

### (Comparative Example 1)

By a procedure described below, monoclinic Nb₂TiO₇, in which the occupancy difference Δp of each Nb in the 4i site in the crystal structure is 0.47, was synthesized. As starting materials, commercially available oxide reagents, Nb₂O₅ and TiO₂, were used. These raw material oxides were weighed such that the molar ratio thereof becomes 1:1, and mixed by a mortar. Then, the mixture was put in an electric furnace and calcined at 800°C for 12 hours. Thereafter, the mixture was sintered at 1400°C for 20 hours. After being cooled to room temperatures, the resultant was put in the electric furnace once again, and annealed (heat-treated) at 600°C for 6 hours. The thus obtained sample was adopted as an active material of Comparative Example 1.

### (Comparative Example 2)

The second niobium titanium composite oxide (Ti_{0.95}Nb_{0.05}O₂) was synthesized by the same method as in Example 1, and this was adopted as an active material according to Comparative Example 2.

### (Comparative Example 3)

Powder, in which the monoclinic Nb₂TiO₇ having the Δp of 0.47, which was synthesized in Comparative Example 1, and the second niobium titanium composite oxide (Ti_{0.95}Nb_{0.05}O₂) synthesized by the same method as in Example 1, were mixed at a molar ratio of 1:1, was adopted as an active material according to Comparative Example 3. Specifically, in Comparative Example 3, two kinds of powders were simply mixed, and no heat treatment was conducted after the mixing.

### (Comparative Example 4)

Powder, in which the monoclinic Nb₂TiO₇ having the Δp of 0.47, which was synthesized in Comparative Example 1, and the commercially available TiO₂, were mixed at a molar ratio of 1:1, was adopted as an active material according to Comparative Example 4. Specifically, in Comparative Example 4, two kinds of powders were simply mixed, and no heat treatment was conducted after the mixing.

### (Comparative Example 5)

Powder, in which the precursor (Nb₂TiO₇) of the first niobium titanium composite oxide having the Δp of 0.01, which was synthesized in Example 1, and the second niobium titanium composite oxide (Ti_{0.95}Nb_{0.05}O₂) synthesized by the same method as in Example 1, were mixed at a molar ratio of 1:1, was adopted as an active material according to Comparative Example 5. Specifically, in Comparative Example 5, two kinds of powders were simply mixed, and no heat treatment was conducted after the mixing.

### (Comparative Example 6)

Powder, in which the precursor (Nb₂TiO₇) of the first niobium titanium composite oxide having the Δp of 0.01, which was synthesized in Example 1, and the commercially available TiO₂, were mixed at a molar ratio of 1:1, was adopted as an active material according to Comparative Example 6. Specifically, in Comparative Example 6, two kinds of powders were simply mixed, and no heat treatment was conducted after the mixing.

### (Comparative Example 7)

An active material was synthesized by the same method as in Example 3, except that the Nb maldistribution process was performed as described below.

Specifically, the powder obtained by pulverization by a ball mill was subjected to first annealing (heat treatment) at 500°C for one hour, and then the resultant was subjected to second annealing (heat treatment) at 400°C for one hour.

### <Electrochemical measurements

### (Fabrication of electrochemical measurement cells)

To begin with, electrochemical measurement cells corresponding to the respective Examples and Comparative Examples were fabricated.

The active material powder obtained in each Example was mixed with acetylene black as the conductive agent. The mixing ratio was 10 parts by weight of acetylene black to 100 parts by weight of the active material. The mixture was dispersed in NMP (N-methyl-2-pyrrolidone). The obtained dispersion liquid was mixed with polyvinylidene fluoride (PVdF) as the binder, and an electrode slurry was made. 10 parts by weight of the PVdF was used to 100 parts by weight of the active material. The slurry was applied to both surfaces of a current collector composed of an aluminum foil, by using a blade. The resultant was dried at 130°C for 12 hours in a vacuum, and thus an electrode was obtained.

On the other hand, ethylene carbonate and diethyl carbonate were mixed at a volume ratio of 1:1, and a mixed solvent was prepared. In this mixed solvent, lithium hexafluorophosphate was dissolved at a concentration of 1 M, and a nonaqueous electrolyte was prepared.

An electrochemical measurement cell was made by using the fabricated electrode, a metal lithium foil serving as a counter electrode, and the prepared nonaqueous electrolyte.

### (25°C rate performance evaluation)

Using each fabricated electrochemical measurement cell, a charge-and-discharge test was conducted in a constant temperature bath at 25°C. The charge-and-discharge current value was set at 0.2 C (time discharge rate) in a potential range of 0.8 V or more to 3.0 V or less (vs. Li/Li⁺) with reference to the oxidation-reduction potential of lithium. Thereby, a 0.2 C discharge capacity was measured. Note that in order to make constant the temperature in the inside of each electrochemical measurement cell, the cell was left to stand for three hours in the 25°C constant temperature bath prior to the charge-and-discharge test.

Further, after charge was performed at 0.2 C at 25°C, discharge at 5 C was performed, and a 5 C discharge capacity was measured. The ratio (5 C discharge capacity [25°C]/0.2 C discharge capacity [25°C] × 100%) of the 5 C discharge capacity at 25°C to the previously measured 0.2 C discharge capacity at 25°C was calculated. The 5 C/0.2 C discharge capacity ratio serves as an index for evaluating the quick charge-and-discharge performance.

### (45°C high-temperature cycle durability evaluation)

After the cell was left to stand for three hours in a 45°C constant temperature bath, charge-and-discharge was conducted by 50 cycles at 1 C at 45°C. Subsequently, after the cell was left to stand for three hours in a 25°C constant temperature bath, a 0.2 C discharge capacity was measured. The ratio (0.2 C discharge capacity [25°C] after 50 cycles/initial-time 0.2 C discharge capacity [25°C] × 100%) of the 0.2 C discharge capacity at 45°C after 50 cycles to the previously measured 0.2 C discharge capacity at 25°C was calculated.

The above results are summarized in Table 1 and Table 2 below. In Table 1, the column of "4i site occupancy difference ΔP in precursor" shows a difference between a maximum value and a minimum value of Nb occupancy in the 4i site with respect to the precursor of the first niobium titanium composite oxide prior to the Nb maldistribution process. Note that, in Comparative Examples 3 to 6, since the maldistribution process was not conducted after the first niobium titanium composite oxide and the second niobium titanium composite oxide were mixed, symbol "-" is indicated in this column. In addition, in Comparative Examples 1 and 2, since the mixing itself between the first niobium titanium composite oxide and the second niobium titanium composite oxide was not conducted, symbol "-" is indicated in this column.

Besides, in Table 2, the column of "Mixture molar ratio (first:second)" indicates a mixture molar ratio between the precursor of the first niobium titanium composite oxide and the second niobium titanium composite oxide. Note that, in Comparative Examples 3 to 6, not the mixture molar ratio between the precursor and the second niobium titanium composite oxide, but the mixture molar ratio between the oxide corresponding to the first niobium titanium composite oxide and the oxide corresponding to the second niobium titanium composite oxide, is indicated. The column of "Nb maldistribution process after mixture" indicates whether the Nb maldistribution process was conducted or not, after the precursor of the first niobium titanium composite oxide and the second niobium titanium composite oxide were mixed.

**[Table 1]**

| Table 1 | First Niobium Titanium Composite Oxide | | | | Second Niobium Titanium Composite Oxide | |
|---|---|---|---|---|---|---|
| | composition | subscripts in formula (I) | 4i site occupancy difference ΔP in precursor | 4i site occupancy difference ΔP in active material | composition | Subscripts in formula (II) |
| Example 1 | Nb₂TiO₇ | a=0, b=0, c=1.0 | 0.01 | 0.58 | Ti_{0.95}Nb_{0.05}O₂ | y=0.05, z=2.0 |
| Example 2 | K_{0.004}Nb₂Ti_{0.999}O₇ | a=0.04, b=0, c=0.999 | 0.01 | 0.64 | Ti_{0.95}Nb_{0.05}O₂ | y=0.05, z=2.0 |
| Example 3 | KNb₂Ti_{0.75}O₇ | a=1.0, b=0, c=0.75 | 0.01 | 0.80 | Ti_{0.01}Nb_{0.99}O_{2.495} | y=0.99, z=2.495 |
| Example 4 | Nb_{1.999}Ta_{0.001}TiO₇ | a=0, b=0.001, c=1.0 | 0.01 | 0.55 | Ti_{0.95}Nb_{0.05}O₂ | y=0.05, z=2.0 |
| Example 5 | Nb_{1.999}Ta_{0.001}TiO₇ | a=0, b=0.001, c=1.0 | 0.01 | 0.55 | Ti_{0.95}Nb_{0.05}O₂ | y=0.05, z=2.0 |
| Example 6 | Nb_{1.999} Ta_{0.001} TiO₇ | a=0, b=0.001, c=1.0 | 0.01 | 0.55 | Ti_{0.95}Nb_{0.05}O₂ | y=0.05, z=2.0 |
| Example 7 | Nb_{1.999}Ta_{0.001}TiO₇ | a=0, b=0.001, c=1.0 | 0.01 | 0.55 | Ti_{0.95}Nb_{0.05}O₂ | y=0.05, z=2.0 |
| Example 8 | Nb_{1.999}Ta_{0.001}TiO₇ | a=0, b=0.001, c=1.0 | 0.01 | 0.55 | Ti_{0.95}Nb_{0.05}O₂ | y=0.05, z=2.0 |
| Example 9 | NbTaTiO₇ | a=0, b=1.0, c=1.0 | 0.01 | 0.50 | Ti_{0.9}Nb_{0.1}O_{2.05} | y=0.1, z=2.05 |
| Example 10 | Nb_{1.9} Ta_{0.1}TiO₇ | a=0, b=0.1, c=1.0 | 0.01 | 0.58 | Ti_{0.5}Nb_{0.5}O_{2.25} | y=0.5, z=2.25 |
| Example 11 | Nb_{1.5}Ta_{0.5}TiO₇ | a=0, b=0.5, c=1.0 | 0.01 | 0.56 | Ti_{0.3}Nb_{0.7}O_{2.35} | y=0.7, z=2.35 |
| Example 12 | Nb_{1.1}W_{0.9}Fe_{0.9}Ti_{0.1}O₇ | a=0, b=0.9, c=0.1 | 0.01 | 0.52 | Ti_{0.95}Nb_{0.05}O₂ | y=0.05, z=2.0 |
| Example 13 | Nb_{1.1}Mo_{0.9}Fe_{0.9}Ti_{0.1}O₇ | a=0, b=0.9, c=0.1 | 0.01 | 0.51 | Ti_{0.95}Nb_{0.05}O₂ | y=0.05, z=2.0 |
| Example 14 | Nb_{1.999}P_{0.001}TiO₇ | a=0, b=0.001, c=1.0 | 0.01 | 0.62 | Ti_{0.95}Nb_{0.05}O₂ | y=0.05, z=2.0 |
| Comparative Example 1 | Nb₂TiO₇ | a=0, b=0, c=1.0 | - | 0.47 | - | - |
| Comparative Example 2 | - | - | - | - | Ti_{0.95}Nb_{0.05}O₂ | y=0.05, z=2.0 |
| Comparative Example 3 | Nb₂TiO₂ | a=0, b=0, c=1.0 | - | 0.47 | Ti_{0.95}Nb_{0.05}O₂ | y=0.05, z=2.0 |
| Comparative Example 4 | Nb₂TiO₂ | a=0, b=0, c=1.0 | - | 0.47 | TiO₂ | y=0, z=2.0 |
| Comparative Example 5 | Nb₂TiO₂ | a=0, b=0, c=1.0 | - | 0.01 | Ti_{0.95}Nb_{0.05}O₂ | y=0.05, z=2.0 |
| Comparative Example 6 | Nb₂TiO₇ | a=0, b=0, c=1.0 | - | 0.01 | TiO₂ | y=0, z=2.0 |
| Comparative Example 7 | KNb₂Ti_{0.75}O₇ | a=1.0, b=0, c=0.75 | 0.01 | 0.83 | Ti_{0.01}Nb_{0.99}O_{2.495} | y=0.99, z=2.495 |

**[Table 2]**

| Table 2 | Mixture molar ratio (first : second) | Nb maldistribution process after mixture | 0.2C discharge capacity (mAhlg) | 5 C/0.2 C discharge capacity ratio | cycle capacity retention rate (%) |
|---|---|---|---|---|---|
| Example 1 | 1 : 1 | Yes | 265 | 0.87 | 0.95 |
| Example 2 | 1 : 1 | Yes | 263 | 0.89 | 0.94 |
| Example 3 | 1 : 1 | Yes | 255 | 0.91 | 0.93 |
| Example 4 | 1 : 1 | Yes | 270 | 0.92 | 0.94 |
| Example 5 | 1 : 0.9 | Yes | 275 | 0.9 | 0.96 |
| Example 6 | 1 : 0.8 | Yes | 281 | 0.89 | 0.96 |
| Example 7 | 1 : 0.7 | Yes | 287 | 0.88 | 0.95 |
| Example 8 | 1 : 0.6 | Yes | 290 | 0.87 | 0.92 |
| Example 9 | 1 : 1 | Yes | 255 | 0.92 | 0.91 |
| Example 10 | 1 : 1 | Yes | 272 | 0.9 | 0.93 |
| Example 11 | 1 : 1 | Yes | 266 | 0.92 | 0.93 |
| Example 12 | 1 : 1 | Yes | 256 | 0.93 | 0.92 |
| Example 13 | 1 : 1 | Yes | 261 | 0.94 | 0.91 |
| Example 14 | 1 : 1 | Yes | 268 | 0.92 | 0.96 |
| Comparative Example 1 | 1:0 | No | 289 | 0.73 | 0.7 |
| Comparative Example 2 | 0 : 1 | No | 64 | 0.05 | 0.1 |
| Comparative Example 3 | 1 : 1 | No | 261 | 0.77 | 0.86 |
| Comparative Example 4 | 1 : 1 | No | 260 | 0.75 | 0.64 |
| Comparative Example 5 | 1 : 1 | No | 258 | 0.72 | 0.82 |
| Comparative Example 6 | 1 : 1 | No | 256 | 0.7 | 0.65 |
| Comparative Example 7 | 1 : 1 | Yes | 254 | 0.85 | 0.83 |

As shown in Examples 1 to 14, when Δp satisfies 0.50 ≤ Δp ≤ 0.80, the active material successfully had an excellent quick charge-and-discharge performance in the entirety of this numerical range, and successfully achieved both a high energy density and a high-temperature durability.

From the comparison between Example 3 and Comparative Example 7, it is understood that if the Δp exceeds 0.80, the quick charge-and-discharge performance and the high-temperature durability, for example, lower.

In addition, for example, Example 1 and Comparative Example 3 are compared. Compared to Comparative Example 3 in which the first niobium titanium composite oxide with the Δp of 0.47 and the second niobium titanium composite oxide are simply mixed, it is understood that the Example with the Δp of 0.58 was excellent in all of the quick charge-and-discharge performance, energy density and high-temperature durability. In addition, as shown in Comparative Example 5, when the first niobium titanium composite oxide is not maldistributed (when Δp is 0.01), it is understood that even if the first niobium titanium composite oxide and the second niobium titanium composite oxide are mixed, each of the quick charge-and-discharge performance, energy density and high-temperature durability is inferior.

In Examples 2, 3 and 14, it is considered that since the first niobium titanium composite oxide includes K or P, the melting point of the first niobium titanium composite oxide lowered, and the maldistribution of Nb was promoted. In addition, in Examples 9 to 13, it is considered that since the Nb amount in the first niobium titanium composite oxide is small and the first niobium titanium composite oxide includes Ta, W, Mo and Fe, the randomization of Nb (decrease of Δp) was promoted.

According to at least one of the above-described approaches and Examples, an active material is provided. The active material includes a first niobium titanium composite oxide expressed by a general formula (I), and a second niobium titanium composite oxide expressed by a general formula (II) and having a rutile-type crystal structure. The first niobium titanium composite oxide belongs to a crystal structure of a space group C2/m, and has a difference Δp between a maximum value and a minimum value of Nb occupancy in a 4i site, the difference Δp being 0.50 ≤ Δp ≤ 0.80,

KₐNb_{2-b}M_{b+1-c}Ti_{c}O₇ ... (I)

Ti_{1-y}Nb_{y}O_{z} ... (II).

In the general formula (I), M is at least one element selected from the group consisting of P, Mo, W, Fe and Ta, a satisfies 0 ≤ a ≤ 1, b satisfies 0 ≤ b ≤ 1, and c satisfies 0 < c ≤ 1. In general formula (II), y satisfies 0 < y < 0.5, and z satisfies 2.0 ≤ z < 2.5.

According to the active material, since the electron correlation between the lithium ions and the oxide ions can be weakened in the first niobium titanium composite oxide, the mobility of the lithium ions can be enhanced. In addition, since the second niobium titanium composite oxide includes niobium, the skeleton structure between the metal ions and the oxide ions can be strengthened, compared to the case in which the second niobium titanium composite oxide includes only titanium, and the crystal structure during charge and discharge is stabilized. As a result, the active material has an excellent repetitive quick charge-and-discharge performance, and can consistently achieve both a high energy density and a high-temperature durability.

## Claims

1. An active material comprising:
a first niobium titanium composite oxide expressed by a general formula (I) below; and
a second niobium titanium composite oxide expressed by a general formula (II) below and having a rutile-type crystal structure,
the first niobium titanium composite oxide belonging to a crystal structure of a space group C2/m, and having a difference Δp between a maximum value and a minimum value of Nb occupancy in a 4i site, the difference Δp being 0.50 ≤ Δp ≤ 0.80,
KₐNb_{2-b}M_{b+1-c}Ti_{c}O₇ ... (I)
Ti_{1-y}Nb_{y}O_{z} ... (II),
wherein
in the general formula (I), M is at least one element selected from the group consisting of P, Mo, W, Fe and Ta, a satisfies 0 ≤ a ≤ 1, b satisfies 0 ≤ b ≤ 1, and c satisfies 0 < c ≤ 1, and
in the general formula (II), y satisfies 0 < y < 0.5, and z satisfies 2.0 ≤ z < 2.5.

2. The active material according to claim 1, wherein in the general formula (I), a satisfies 0 ≤ a ≤ 0.01.

3. The active material according to claim 1 or 2, wherein in the general formula (I), b satisfies 0 ≤ b ≤ 0.1.

4. The active material according to any one of claims 1 to 3, wherein in the general formula (I), c satisfies 0.8 ≤ c ≤ 1.0.

5. The active material according to any one of claims 1 to 4, wherein in the general formula (II), y satisfies 0.0001 ≤ y ≤ 0.2.

6. The active material according to any one of claims 1 to 5, wherein in the general formula (II), z satisfies 2.0 ≤ z ≤ 2.1.

7. The active material according to any one of claims 1 to 6, wherein a molar ratio of the second niobium titanium composite oxide to the first niobium titanium composite oxide is in a range of 0.5 to 1.0.

8. The active material according to any one of claims 1 to 7, wherein a molar ratio (M_{Nb}/M_{Ti}) of niobium to titanium in the first niobium titanium composite oxide is higher than a molar ratio (M_{Nb}/M_{Ti}) of niobium to titanium in the second niobium titanium composite oxide.

9. The active material according to any one of claims 1 to 8, wherein the Δp satisfies 0.55 ≤ Δp ≤ 0.65.

10. An electrode comprising the active material according to any one of claims 1 to 9.

11. A secondary battery comprising:
a negative electrode (3) which is the electrode of claim 10;
a positive electrode (5); and
an electrolyte.

12. A battery pack (300) comprising the secondary battery (100) of claim 11.

13. The battery pack (300) according to claim 12, further comprising:
an external power distribution terminal (350); and
a protective circuit (346).

14. A vehicle (400) comprising the battery pack (300) according to claim 12 or 13.

15. The vehicle (400) according to claim 14, which comprises a mechanism configured to convert kinetic energy of the vehicle (400) to regenerative energy.

## Patentansprüche

1. Aktivmaterial, umfassend:
ein erstes Niob-Titan-Kompositoxid, das durch die nachstehende allgemeine Formel (I) ausgedrückt wird; und
ein zweites Niob-Titan-Kompositoxid, das durch die nachstehende allgemeine Formel (II) ausgedrückt wird und eine Kristallstruktur vom Rutil-Typ aufweist,
wobei das erste Niob-Titan-Kompositoxid zu einer Kristallstruktur einer Raumgruppe C2/m gehört und eine Differenz Δp zwischen einem Maximalwert und einem Minimalwert der Nb-Belegung an einer 4i-Stelle aufweist, wobei die Differenz Δp 0,50 ≤ Δp ≤ 0,80 beträgt,
KₐNb_{2-b}M_{b+1-c}Ti_{c}O₇ ... (I)
Ti_{1-y}Nb_{y}O_{z} ... (II),
worin
in der allgemeinen Formel (I) M mindestens ein Element ist, das aus der Gruppe ausgewählt ist, die aus P, Mo, W, Fe und Ta besteht, a 0 ≤ a ≤ 1 erfüllt, b 0 ≤ b ≤ 1 erfüllt und c 0 < c ≤ 1 erfüllt, und
in der allgemeinen Formel (II) y 0 < y < 0,5 erfüllt und z 2,0 ≤ z < 2,5 erfüllt.

2. Aktivmaterial gemäß Anspruch 1, wobei in der allgemeinen Formel (I) a 0 ≤ a ≤ 0,01 erfüllt.

3. Aktivmaterial gemäß Anspruch 1 oder 2, wobei in der allgemeinen Formel (I) b 0 ≤ b ≤ 0,1 erfüllt.

4. Aktivmaterial gemäß einem der Ansprüche 1 bis 3, wobei in der allgemeinen Formel (I) c 0,8 ≤ c ≤ 1,0 erfüllt.

5. Aktivmaterial gemäß einem der Ansprüche 1 bis 4, wobei in der allgemeinen Formel (II) y 0,0001 ≤ y ≤ 0,2 erfüllt.

6. Aktivmaterial gemäß einem der Ansprüche 1 bis 5, wobei in der allgemeinen Formel (II) z 2,0 ≤ z ≤ 2,1 erfüllt.

7. Aktivmaterial gemäß einem der Ansprüche 1 bis 6, wobei ein Molverhältnis von dem zweiten Niob-Titan-Kompositoxid zu dem ersten Niob-Titan-Kompositoxid im Bereich von 0,5 bis 1,0 liegt.

8. Aktivmaterial gemäß einem der Ansprüche 1 bis 7, wobei ein Molverhältnis (M_{Nb}/M_{Ti}) von Niob zu Titan in dem ersten Niob-Titan-Kompositoxid höher als ein Molverhältnis (M_{Nb}/M_{Ti}) von Niob zu Titan in dem zweiten Niob-Titan-Kompositoxid ist.

9. Aktivmaterial gemäß einem der Ansprüche 1 bis 8, wobei Δp 0,55 ≤ Δp ≤ 0,65 erfüllt.

10. Elektrode, umfassend das Aktivmaterial gemäß einem der Ansprüche 1 bis 9.

11. Sekundärbatterie, umfassend:
eine negative Elektrode (3), die die Elektrode gemäß Anspruch 10 ist;
eine positive Elektrode (5); und
einen Elektrolyten.

12. Batteriepack (300), umfassend die Sekundärbatterie (100) gemäß Anspruch 11.

13. Batteriepack (300) gemäß Anspruch 12, ferner umfassend:
einen externen Stromverteilungsanschluss (350); und
eine Schutzschaltung (346).

14. Fahrzeug (400), umfassend den Batteriepack (300) gemäß Anspruch 12 oder 13.

15. Fahrzeug (400) gemäß Anspruch 14, umfassend einen Mechanismus, der zum Umwandeln von kinetischer Energie des Fahrzeugs (400) in regenerative Energie konfiguriert ist.

## Revendications

1. Matériau actif comprenant :
un premier oxyde composite de niobium titane exprimé par une formule (I) générale ci-dessous ; et
un deuxième oxyde composite de niobium titane exprimé par une formule (II) générale ci-dessous et ayant une structure cristalline de type rutile,
le premier oxyde composite de niobium titane appartenant à une structure cristalline d'un espace spatial C2/m, et ayant une différence Δp entre une valeur maximale et une valeur minimale d'occupation Nb dans un site 4i, la différence Δp étant 0,50 ≤ Δp ≤ 0,80,
KₐNb_{2-b}M_{b+1-c}Ti_{c}O₇... (I)
Ti_{1-y}Nb_{y}O_{z}... (II),
dans lequel
dans la formule (I) générale, M est au moins un élément sélectionné parmi le groupe constitué de P, Mo, W, Fe et Ta, a satisfait 0 ≤ a ≤ 1, b satisfait 0 ≤ b ≤ 1, et c satisfait 0 < c ≤ 1, et
dans la formule (II) générale, y satisfait 0 < y < 0,5, et z satisfait 2,0 ≤ z < 2,5.

2. Matériau actif selon la revendication 1, dans lequel dans la formule (I) générale, a satisfait 0 ≤ a ≤ 0,01.

3. Matériau actif selon la revendication 1 ou la revendication 2, dans lequel dans la formule (I) générale, b satisfait 0 ≤ b ≤ 0,1.

4. Matériau actif selon l'une quelconque des revendications 1 à 3, dans lequel dans la formule (I) générale, c satisfait 0,8 ≤ c ≤ 1,0.

5. Matériau actif selon l'une quelconque des revendications 1 à 4, dans lequel dans la formule (II) générale, y satisfait 0,0001 ≤ y ≤ 0,2.

6. Matériau actif selon l'une quelconque des revendications 1 à 5, dans lequel dans la formule (II) générale, z satisfait 2,0 ≤ z ≤ 2,1.

7. Matériau actif selon l'une quelconque des revendications 1 à 6, dans lequel un rapport molaire du deuxième oxyde composite de niobium titane au premier oxyde composite de niobium titane est dans une plage de 0,5 à 1,0.

8. Matériau actif selon l'une quelconque des revendications 1 à 7, dans lequel un rapport molaire (M_{Nb}/M_{Ti}) de niobium à titane dans le premier oxyde composite de niobium titane est supérieur à un rapport molaire (M_{Nb}/M_{Ti}) de niobium à titane dans le deuxième oxyde composite de niobium titane.

9. Matériau actif selon l'une quelconque des revendications 1 à 8, dans lequel le Δp satisfait 0,55 ≤ Δp ≤ 0,65.

10. Électrode comprenant le matériau actif selon l'une quelconque des revendications 1 à 9.

11. Batterie secondaire comprenant :
une électrode (3) négative qui est l'électrode selon la revendication 10 ;
une électrode (5) positive ; et
un électrolyte.

12. Bloc-batterie (300) comprenant la batterie (100) secondaire selon la revendication 11.

13. Bloc-batterie (300) selon la revendication 12, comprenant en outre :
un terminal (350) de distribution électrique externe ; et
un circuit (346) de protection.

14. Véhicule (400) comprenant le bloc-batterie (300) selon la revendication 12 ou la revendication 13.

15. Véhicule (400) selon la revendication 14, qui comprend un mécanisme configuré pour convertir de l'énergie cinétique du véhicule (400) en énergie régénérative.
